# EUROPÄISCHE PATENTSCHRIFT

(11) **EP 0 373 175 B1**
(45) Veröffentlichungstag und Bekanntmachung des Hinweises auf die Patenterteilung: **02.11.1994**
(21) Anmeldenummer: 88907281.5
(22) Anmeldetag: 11.08.1988
(51) Int. Cl.: G06F 7/10, G06F 15/40, H04L 9/00, G11C 8/00

(54) **EINRICHTUNG ZUR IDENTIFIZIERUNG VON NACHRICHTEN**
DEVICE FOR IDENTIFICATION OF MESSAGES
DISPOSITIF D'IDENTIFICATION DE MESSAGES

(30) Priorität: 13.08.1987 DE 3726901; 10.08.1988 DE 3827172
(43) Veröffentlichungstag der Anmeldung: 20.06.1990
(73) Patentinhaber: ELSNER, Peter, D-81476 München (DE)
(72) Erfinder: ELSNER, Peter, D-81476 München (DE)
(86) Internationale Anmeldenummer: EP8800717
(87) Internationale Veröffentlichungsnummer: WO8901690

(56) Entgegenhaltungen:
- EP-A- 0 020 999
- EP-A- 0 027 853
- Journal of the Association for Computing Machinery, vol.19,no.3, July 1972(New York, US) L.E.Stanfel: "Pratical aspects of doubly chained trees for retrievel", Seiten 425-436
- Patent Abstracts of Japan, vol. 2, no. 10, page 10293 E77,25 January1978, & JP, A, 52125239(FUJITSUU K.K.) 20 October 1977
- Electronik, vol. 27, no. 14,15 December 1978,(München, DE) K.Holtz et al.:"Der selbstlernende und programmierfreie Assoziationscomputer", Seiten 39-46, 53-65

## Beschreibung

Die Erfindung betrifft das Gebiet der Nachrichten-Umschlüsselung und das Gebiet der Identifizierung von Nachrichten, Objekten, Personen etc.. Verschlüsselung, Identifizierung und Entschlüsselung sind sachlich eng miteinander verwandt. Im Prinzip ist die Identifizierung ebenso wie die Entschlüsselung die Interpretation bzw. Übersetzung von Merkmalen bzw. Nachrichten eines Codes in Merkmale bzw. Nachrichten eines anderen Codes. Das im folgenden offenbarte Verfahren und die Einrichtung zur Durchführung des Verfahrens lassen sich sowohl für die Nachrichten-Verschlüsselung und -Entschlüsselung als auch für Aufgaben der Identifizierung einsetzen.

Bekannt als Personen-Identifiziermittel ist der Fingerabdruck. Infolge der großen Vielfalt der in ihm enthaltenen individuellen Merkmale speichert er einen so großen "persönlichen Datensatz", daß er als unverwechselbares, fälschungssicheres Identifiziermittel gelten kann. Von Vorteil ist seine Unverlierbarkeit und ständige Verfügbarkeit. Die darauf aufbauenden Identifiziersysteme sind jedoch sehr aufwendig. DE-B-3712089 beschreibt eine Lösung, bei der ein auf einer Fingerauflage positionierter Finger mittels Sensoren und Lichtimpuls-Quelle abgetastet wird; die Sensorsignale werden in einer Rechnerschaltung ausgewertet, wobei Lesen, Vergleichen und Speichern der Identifizierinformation mittels eines zusätzlichen Steuerrechners erfolgt. Obwohl diese Lösung einen möglichst kompakten Aufbau anstrebt, sind auf dieser Lösung aufbauende Identifiziersysteme noch sehr aufwendig und für einen universellen Einsatz ungeeignet.

Bekannt sind ferner elektronisch arbeitende Identifiziermittel als Magnetkarten oder Chipkarten in Scheckkartenform. Eine elektronische Schlüsselkarte, die mehrere unterschiedlich codierte Schlösser öffnet, beschreibt DE-A-3628525: Die Schlüsselkarte weist an beiden Enden eine Codierung auf und ermöglicht damit den Zutritt zu wenigstens zwei Schlössern. Diese Karten haben den Nachteil, daß sie einen Aufbewahrungsort benötigen und somit verlierbar, vergeßbar und diebstahlgefährdet und nicht unabhängig von der Bekleidung in jeder Lebenslage, auch in Gefahrensituationen, sofort verfügbar und einsetzbar sind. Sie haben ferner den Nachteil, daß sie platz- und kostenaufwendige Auswertestationen erfordern und daß sie empfindlich gegen mechanische Verformungen und Beschädigungen sind.

Aus der Schweizer Patentschrift 546 446 ist eine Einrichtung mittels Datenträger zum Identifizieren von Individuen durch eine Prüfstation bekannt, die den Schutz der Identifizierdaten gegen Duplizieren und unbefugten Datenzugang zum Ziel hat. Datenträger und Prüfstation tauschen zu diesem Zweck wechselseitig Informationsfolgen aus und vergleichen sie mit den jeweils gespeicherten Informationsfolgen, wobei die Prüfstation bei Übereinstimmung ein "Gutsignal" erzeugt. Diese Patentschrift liefert eine Lösung für den Datenverkehr zwischen Datenträger und Prüfstation, wobei auf beiden Seiten aufwendige Informationsgeneratoren mit Speichern, Vergleichern und Weichen erforderlich sind. Von Nachteil ist hier der hohe Aufwand an elektronischen Schaltungsmitteln und die daraus resultierenden teuren Herstellkosten und eingeschränkte Anwendbarkeit. Ein universeller Einsatz für viele unterschiedliche Anwendungsfälle, die sich teilweise erst im Verlauf der Benutzung des Datenträgers ergeben können, ist hier nicht möglich, da jeder Anwendungsfall, d.h. jede Prüfstation im Datenträger eigene geschützte Speicherbereiche vorsieht, die - entgegen diesem Verfahren - teilweise erst im Verlauf der Benutzung des Datenträgers programmiert werden müßten. Eine ähnliche Lösung beschreibt DE-B-2224937.

Das US-Patent 3,971,916 beschreibt als Identifizierungsmittel einen vorwiegend für Bankanwendungen konzipierten tragbaren Speicher, in dem bei Ausgabe an den Inhaber eine persönliche, geheime Identitätsnummer, die Nummer des Bankkontos und weitere persönliche Daten programmiert werden, und der als Fingerring gestaltet sein kann. Von Nachteil sind die für jeden Anwendungsfall erforderliche Programmierung und die begrenzte Datenkapazität des Speichers, die einem universellen Einsatz entgegenstehen.

Bekannt aus DE-A-2657182 ist als Identifiziermittel ein Datenträger, der durch Anregung infolge energetischer Kopplung mit einem Auswerter eine im Datenträger gespeicherte Information an den Auswerter überträgt, wobei der Datenträger als Fingerring gestaltet sein kann, der aus dem Auswerter energetisch versorgt wird. Nachteilig an dieser Lösung ist die begrenzte Informationsmenge des Datenträgers, die nicht geheim bleiben kann und die für mehrere Anwender eine Zuteilung und Überwachung erfordert, so daß sie sich nicht für einen universellen Einsatz eignet.

Diesen bekannten Lösungen gemeinsam ist, daß die Identität und die zur Identitätsabfrage berechtigten Codes zwecks Vergleich jeweils anwendungsbezogen in das Identifiziermittel programmiert werden müssen, so daß es Veränderungen und notwendigen Überwachungen unterliegt, die einen universellen, anwendungsunabhängigen Einsatz nicht zulassen. Im übrigen ermöglicht keines der bekannten Identifiziermittel zugleich den Schutz identitätsbezogener Daten, d.h. die Datenverschlüsselung.

Bekannt sind Datenverschlüsselungssysteme, bei denen die Kommunikationspartner auf Datenträgern, z.B. als Zufallsinformation, die gleiche Schlüsselinformation besitzen, mittels der sie die Nachrichten direkt Bit für Bit umschlüsseln, wobei die Bit der Schlüsselinformation nur einmal verwendet werden. Ein Nachteil dieser Systeme ist der sehr hohe Bedarf an Schlüsselinformation, sowie Synchronisationsprobleme zwischen den Kommunikationspartnern.

Bekannt sind ferner Verschlüsselungssysteme, die das Problem des hohen Schlüsselinformationsbedarfs mittels Schlüsselgeneratoren lösen, die in Abhängigkeit von verschiedenen Grundschlüsseln eine mit dem Klartext zu mischende Schlüsselinformation erzeugen. Nachteilig ist hierbei die Handhabung und, damit verbunden, das Problem der Geheimhaltung dieser in Zeitabständen auszuwechselnden Grundschlüssel. Hierfür gibt die europäische Patentanmeldung 0 022 069 eine Lösung an, bei der diese Schlüssel am Umschlüsselort aus separaten, abgeschlossenen Schlüsselbehältern mit einer Schlüsselkapazität von ca. einem Jahr laufend erneuert werden. Ein ähnliches, verbessertes Schlüsselspeichermodul beschreibt DE-A-3340582, das aus einem Schlüsselgenerator und einem ladbaren und löschbaren Quellschlüsselspeicher besteht, wobei der Schlüsselgenerator die modulinternen, von außen nicht lesbaren Quellschlüssel mit einem extern vom Schlüsselgerät angelieferten Zusatzschlüssel verarbeitet und als Grundschlüssel an das Schlüsselgerät ausliefert. Ein Nachteil beider Lösungen ist die begrenzte Nutzungsdauer der Schlüssel, die im Verlauf der Zeit ein Nachladen der Schlüsselspeicher erfordert.

Bekannt als Pseudozufallsgeneratoren für Verschlüsselungssysteme sind u.a. aus DE-B-2451711 und DE-B-3732432 mehrstufige, rückgekoppelte Schieberegister, wobei die Stufenzahl und die Auslegung der Rückkopplung, d.h. die Hardware-Schaltung den Schlüssel bestimmen. Diese Systeme sind nicht universell für unterschiedliche Anwendungsfälle einsetzbar, da Nachrichtensender und -Empfänger das gleiche Gerät benötigen. Außerdem begrenzen die Rückkopplungen der Schieberegister die Arbeitsgeschwindigkeit dieser Systeme.

DE-B-3129911 beschreibt einen Pseudozufallsgenerator, der durch einen mit Zufallsinformation beschriebenen Schreib-Lese-Speicher realisiert ist, aus dem diese Zufallsinformation, adressiert über einen ladbaren Adresszähler, ausgelesen wird. Diese Lösung ist für Verschlüsselungsaufgaben ungeeignet, da die Zufallsinformation dieses Generators einfach zu ermitteln ist.

Alle bekannten Verschlüsselungssysteme haben den gemeinsamen Nachteil, daß ihre Schlüsselquellen nicht zeitlos beständig und daß sie an die jeweiligen Anwendungsfälle gebunden sind.

Der Erfindung liegt die Aufgabe zugrunde, eine universell einsetzbare, zeitlos beständige, besonders platzsparende und aufwandsarme Einrichtung zur Identifizierung und/oder identitätsbezogenen Informationsverschlüsselung mittels individueller Datenträger zu schaffen, die auch für eine Vielzahl unterschiedlicher, voneinander unabhängiger Anwendungen für das Identifizierobjekt und als Schlüsselquelle nur einen individuellen Datenträger benötigt, der, einmal hergestellt, unverändert alle möglichen, unterschiedlichen Anwendungen, auch künftige, abdeckt. Dabei soll er für personenbezogene Anwendungen, wie der Fingerabdruck, fälschungssicher, einfach handhabbar und ständig verfügbar sein.

Diese Aufgabe wird erfindungsgemäß durch die kennzeichnenden Merkmale der Ansprüche 1 und 9 gelöst.

Die Ansprüche 17 bis 19 kennzeichnen eine bevorzugte Ausgestaltung der Erfindung, die durch bitweise binäre Nachrichtenumschlüsselung mittels eines Speichers besonders platzsparend und aufwandsarm ist. Ein Ausführungsbeispiel nach dieser Ausgestaltung ist nachfolgend näher erläutert.

Die durch die Ansprüche 7 und 15 gekennzeichnete Lösung ersetzt die der Identifizierung dienenden, individuellen Merkmale durch eine datentechnisch speicherbare individuelle, beliebige Identifizierinformation als Identifizierbasis, an der beliebige Identitätsanfragen, d.h. Anfragenachrichten eindeutige, nach dem individuellen Schlüssel der Identifizierbasis zugeordnete Identitätsantworten, d.h. Antwortnachrichten assoziieren.

Dieses Prinzip der assoziierten, individuellen Umschlüsselung einer beliebigen Anfragenachricht in eine eindeutig zugeordnete Antwortnachricht ermöglicht mit wenig Speicherplatz eine praktisch unbegrenzte Vielzahl möglicher Antwortnachrichten. So ergeben sich z.B. bei einem binär organisierten Speicher mit einer Identifizierbasis von 256 Adressen bei einer Nachrichtenblocklänge von 256 Bit bis zu 10⁷⁵ mögliche unterschiedliche Anfrage-/Antwortnachrichten, so daß sich beliebige Anwender unabhängig voneinander und ohne sich absprechen zu müssen, aus ein und demselben Identifizierdatenträger des Identifizierobjektes mittels beliebiger individueller Anfragenachrichten jeweils eindeutig zugeordnete individuelle Antwortnachrichten "ziehen" können. Damit ist dieser eine, individuell zugeordnete Identifizierdatenträger universell für beliebige, unterschiedliche und voneinander unabhängige Anwendungen zur Identifizierung und/oder identitätsbezogenen Verschlüsselung anwendbar.

Aufgrund seiner nahezu unbegrenzten Antwortkapazität erfordern auch beliebig viele, neu hinzukommende Anwendungen keine Veränderung der Identifizierbasis, so daß sich diese zeitlos beständig als Festwertspeicher realisieren läßt.

Erfindungsgemäß können diese Festwertspeicher als Identifizierbasis eine beliebige Information enthalten, die nie ausgelesen wird, sondern an der nur Anfragenachrichten assoziiert werden, d.h. diese Information kann nach kennzeichnenden Merkmalen der Ansprüche 2 und 10 auch eine einmalig bei Herstellung des Speichers erzeugte, völlig unbekannte, unzugängliche, nicht mehr reproduzierbare Zufallsinformation sein. Damit lassen sich diese Speicher einmalig und fälschungssicher ohne Aufzeichnung der Identifizierinformation, d.h. absolut datengeschützt, nicht reproduzierbar und geheim herstellen. Eine Reproduktion der Identifizierinformation über die assoziierten Antwortnachrichten, auch mit modernsten künftigen Datenverarbeitungsanlagen, ist bei Nachrichtenblocklängen von z.B. 256 Bit völlig unmöglich. Eine Reproduktion durch "Öffnen" des Speichers läßt sich durch eine dadurch zwangsläufig verursachte Zerstörung unterbinden.

Niemand, auch nicht der Inhaber des Identifizierdatenträgers, kann somit Kenntnis über die Identifizierbasis erhalten; feststellbar sind nur die für definierte Anfragenachrichten jeweils assoziierten Antwortnachrichten. Diese werden für jeden Anwendungsfall durch eine erste, diesen Anwendungsfall eröffnende Urleseprozedur mit definierten, diesem Anwendungsfall zugeordneten Anfragenachrichten ermittelt und im zugehörigen Auswertesystem z.B. nach den kennzeichnenden Merkmalen der Ansprüche 8 und 22 als Referenz für künftige Identifizierungen assoziativ gespeichert, so daß sie nur über den Identifizierungsvorgang zugänglich sind. Beliebig viele, unterschiedliche Auswertesysteme können sich so ohne Kenntnis der Identifizierbasis nach eigenem Gutdünken beliebig viele Antwortnachrichten aus demselben Datenträger "ziehen".

Diese Datenträger lassen sich nach den kennzeichnenden Merkmalen des Anspruchs 21 aufwandsarm und platzsparend als integrierte Schaltkreise mit weniger als 4 mm² Chipfläche dem Stand der Technik entsprechend z.B. in CMOS-Technologie oder einer anderen, künftigen Hochintegrationstechnologie ausführen.

Nach den kennzeichnenden Merkmalen des Anspruchs 23 läßt sich für personenbezogene Anwendungen der individuelle Datenträger einfach handhabbar und ständig verfügbar gestalten. Diese Lösung verbindet die Vorteile einfacher Handhabbarkeit und ständiger Verfügbarkeit, wie sie z.B. der Fingerabdruck bietet, mit den Vorteilen der datentechnisch aufwandsarm in Datensysteme einbindbaren elektronischen Speicher.

Voraussetzung für diese, auf die Körperfixierung des Datenträgers ausgerichteten Lösungen sind dessen universelle Anwendbarkeit, Fälschungssicherheit, zeitlose Beständigkeit und Miniaturisierung, die durch das erfindungsgemäße Prinzip der Nachrichten-Umschlüsselung realisierbar sind.

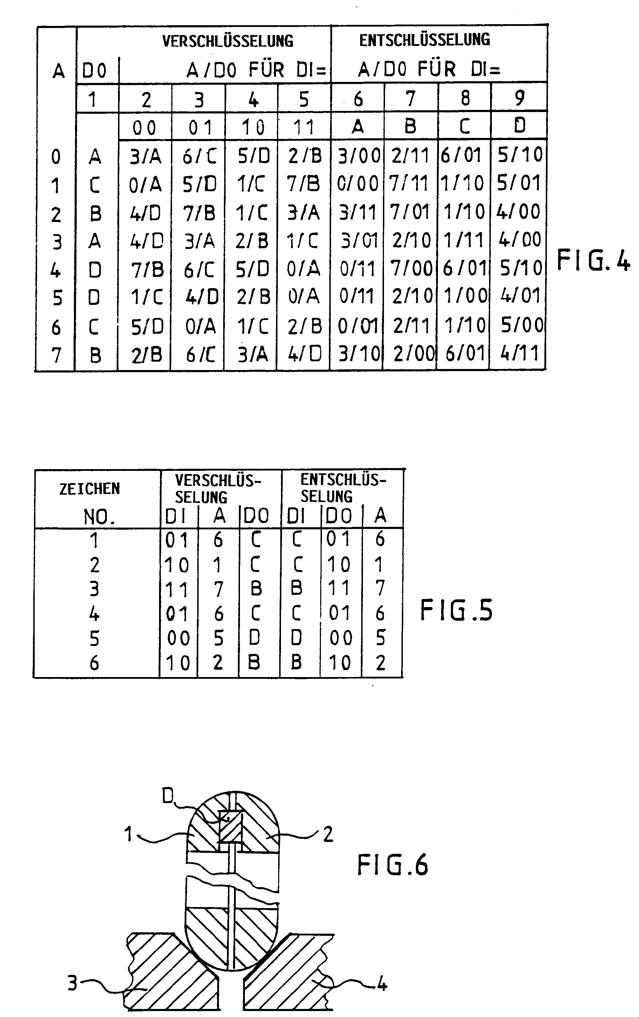

Fig. 4 zeigt das Prinzip der Identifizier- und Verschlüsselungs-Einrichtung anhand einer Tabelle der in Adresse 0 bis 7 eines Speichers hinterlegten Identifizierinformation, wobei in diesem Beispiel binäre Eingangsdaten DI in eine Buchstabenfolge als Ausgangsdaten DO umgesetzt werden, und umgekehrt.

Zur Verschlüsselung speichert Spalte 1 aller Zellen beliebige Ausgangsdaten A, B, C oder D. Die Spalten 2 bis 5 speichern für das Verschlüsseln je Zelle jeweils vier beliebige, nächste Adressen A von Zellen mit unterschiedlichen Ausgangsdaten, von denen eine Adresse durch das jeweils nächste binäre Zeichen 00 bis 11 der Eingangsdaten DI ausgewählt und diesem nächsten Zeichen zugeordnet gelesen wird.

Entsprechend dieser durch das Verschlüsseln vorgegebenen Zuordnung speichern die Spalten 6 bis 9 für das Entschlüsseln je Zelle ebenfalls die vier alternativ als nächste zu lesenden Adressen A mit den jeweils zugeordneten entschlüsselten Binärzeichen 00 bis 11 als Ausgangsdaten DO, von denen eine Adresse durch das jeweils anstehende Zeichen A, B, C oder D der verschlüsselten Eingangsdaten DI ausgewählt wird. Diese Spalten 6 bis 9 für das Entschlüsseln lassen sich aus den Spalten 2 bis 5 für das Verschlüsseln ableiten.

Fig. 5 zeigt als Beispiel für eine binäre Eingangsinformation DI von 12 Bit die umgesetzte Ausgangsinformation DO; dabei werden, ausgehend von der Startadresse O, für das Umsetzen zeichenweise nacheinander die Speicheradressen 6-1-7-6-5-2 durchlaufen.

Fig. 5 zeigt, daß die erzeugte, verschlüsselte Ausgangsinformation C-C-B-C-D-B beim Entschlüsseln wieder den gleichen Speicherdurchlauf bewirkt und damit die ursprüngliche, unverschlüsselte Binärinformation reproduziert.

Je nach Wahl der Zuordnungsrichtung orientiert sich der Speicherdurchlauf nach einem kennzeichnenden Merkmal der Ansprüche 3 und 11 an der Verschlüssel- oder an der Entschlüsselinformation des Speichers. Sind unverschlüsselte und verschlüsselte Daten von gleicher Struktur und Darstellung, z.B. bei binären Datenblöcken gleicher Blocklänge, so sind die Zuordnungsrichtungen für das Verschlüsseln und Entschlüsseln beliebig umkehrbar.

Während die Aufgabe der Datenver- und entschlüsselung mittels gleicher Datenträger bei Sender und Empfänger gelöst wird, erfordert die Aufgabe der Identifizierung individuelle Datenträger, die ihre Identität einem anfragenden Auswerter als Antwortnachricht mitteilen: ähnlich wie bei einem Fingerabdruck als Identitätsmerkmal wird hierbei einem Auswerter ein zunächst unbekannter individueller Datensatz in einer Urleseprozedur (Kennenlern-Prozedur) mitgeteilt, der später der Identifizierung dient. Ähnlich wie beim Datensatz des Fingerabdrucks besteht auch hier das Problem der datengeschützten, gesicherten Speicherung dieses Identitätsmerkmals sowie das Problem des Wiederauffindens, d.h. des geschützten Datenzugriffs zu Identifizierzwecken. Als geeignetes Speicherverfahren bietet sich hier die Assoziativspeicherung an, d.h. die inhaltsadressierte Speicherung. Bei diesem Speicherverfahren sind die gespeicherten Daten zwangsläufig nur durch den Identifiziervorgang mittels der geheimen, die Identität offenbarenden Antwortnachricht zugänglich.

Bekannt sind Assoziativspeicher, d.h. inhaltsadressierte Speicher, in deren Speicherzellen jeweils zusätzlich zur umgesetzten Ausgangsnachricht die jeweils zugeordnete Eingangsnachricht platzunabhängig und reihenfolgeunabhängig gespeichert ist, wobei die einer Eingangsnachricht zugeordnete jeweilige Speicherzelle durch einen Suchvorgang ermittelt wird. Diese bekannten Assoziativspeicher benötigen aber für den Speicherzugriff zeitaufwendige Suchvorgänge, die ihre Anwendbarkeit stark einschränken.

Die DE-A-3009317 sowie DE-A-3311665 beschreiben ein Hybrid-Assoziativspeichersystem, bestehend aus einem nichtassoziativen, in Teilspeicher gegliederten Basisspeicher, dessen Teilspeicher zur Reduzierung der Suchzeiten mittels einer Durchschalteeinrichtung zyklisch nacheinander mit einer Assoziationsmatrix als assoziative Suchoberfläche verbunden werden.

Die DE-A-3534026 gibt für derartige Hybridassoziativspeichersysteme eine Lösung für ein schnellarbeitendes Suchverfahren an.

Diesen bekannten Assoziativspeichersystemen gemeinsam sind für den Speicherzugriff zeitaufwendige Suchverfahren, wobei die bekannten Lösungen darauf abzielen, die Suchoberfläche zu vergrößern und den Suchvorgang durch geeignete Schaltungsmittel und Datenstrukturierung zu beschleunigen. Die Suchzeiten und internen Verbindungen dieser Speichersysteme nehmen mit wachsender Speicherkapazität stark zu, weshalb diese Systeme u.a. für Datenbankanwendungen häufig zu klein oder zu aufwendig sind.

Bekannt zur assoziativen Datenspeicherung sind ferner in nichtassoziativen Speichern angelegte Suchbäume. Das Dokument "Practical aspects of doubly chained trees for retrieval" [1] beschreibt doppelt gekettete Bäume, deren Knoten jeweils zwei Adressen und einen Schlüsselbegriff speichern, nach dem im Baum gesucht wird. Die Suche erfolgt zeichenweise seriell durch Vergleich des Suchargumentes mit dem gespeicherten Schlüsselbegriff, wobei bei Übereinstimmung die nächste Knotenebene für das nächste Suchargument-Zeichen adressiert wird (Sohnzeiger-Adresse) und bei Nichtübereinstimmung die Suche beim Nachbarknoten der gleichen Knotenebene fortgesetzt wird (Bruderzeiger-Adresse), bis entweder der gesuchte Schlüsselbegriff gefunden oder am Ende der Kette der noch fehlende Schlüsselbegriff schließlich neu eingespeichert wird.

Ähnliche Suchbäume sind als B-Bäume, Binärbäume, sortierte Binärbäume, gekettete Listen etc. bekannt [2, 3]. Sie unterscheiden sich in der Anzahl Äste, die von einem Knoten ausgehen und in den Kettungsprinzipien. Allen gemeinsam ist aber der erforderliche Suchvorgang durch zeichenweisen Vergleich eines Suchargumentes mit gespeicherten Schlüsselbegriffen.

Einer Weiterbildung der Erfindung liegt die Aufgabe zugrunde, nachrichten-, objekt- oder personenidentifizierende, verschlüsselte Antwortnachrichten mit Hintergrundinformation assoziativ, d.h. nur über die verschlüsselte Nachricht zugänglich, derart abzuspeichern, daß die zeitraubenden assoziativen Such- und Vergleichsvorgänge sowie der Aufwand bekannter Assoziativspeichersysteme entfallen.

Diese Aufgabe wird durch die kennzeichnenden Merkmale der Ansprüche 8 und 22 gelöst. Die Lösung sieht Speicher vor, die eine Eingangsnachricht beliebiger Länge in diskrete Zeichen gliedern, mit denen sie ohne Suchvorgänge selbstadressierend Adressverzweigungsbäume bilden, die mit jeder neuen Eingangsnachricht wachsen. Im Gegensatz zu den bekannten Suchbäumen dienen die Zeichen der Eingangsnachricht hier nicht als Suchargumente für Vergleichsoperationen, sondern sind direktes Adressierelement für eine Knotengruppe, deren Knotenanzahl durch knotenindividuelle Wachstumsinformationen vorgegeben sind; dementsprechend speichern die Knoten auch nicht die Zeichen der Eingangsnachricht als Schlüsselbegriff.

Diese Speicher interpretieren die Adressen ihrer Speicherzellen als Verzweigungspunktadressen, die eine verzweigungspunktindividuelle Wachstumsinformation speichern, von denen eine Anzahl dieser Wachstumsinformation entsprechender möglicher Äste ausgehen, und tragen für jede neue Eingangsnachricht in diese Speicherzellen dieser Anzahl Baumäste entsprechend eine Anzahl im Prinzip beliebiger, jeweils frei verfügbarer, nächstfolgender Verzweigungspunktadressen ein, von denen jeweils eine Untermenge, zumeist eine bestimmte Adresse, durch das jeweils anstehende Zeichen der Eingangsnachricht ausgewählt wird. Auch bei gleicher Zeichenlänge bzw. Informationsinhalt dieser Zeichen können damit, je nach Wachstumsinformation, unterschiedliche Aststrukturen den Verzweigungspunkten entwachsen; allein die den Verzweigungspunkt kennzeichnende Zelle trägt ihre Wachstumsmerkmale, bzw. wird mit diesen Merkmalen vom Speicher, von der Eingangsnachricht oder von anderer Seite versorgt. Auf diese Weise wächst schrittweise mit jeder neuen Eingangsnachricht ein Adressverzweigungsbaum heran, dessen Äste mit dem Ende der Eingangsnachricht, d.h. mit derem letzten Zeichen, ihren Endpunkt finden. In diese vom letzten Zeichen der Eingangsnachricht ausgewählte letzte Speicherzelle kann z.B. die der Eingangsnachricht zugeordnete umgesetzte Ausgangsnachricht oder auch deren Ablageadresse eingetragen werden. Ebenso ist es möglich, von diesem Endpunkt ausgehend mit einer weiterführenden Nachricht wiederum als Eingangsnachricht in denselben Speicher oder einen beliebigen anderen Speicher einzutreten. Dabei sind hierarchisch nach Zugriffszeiten und Speicherkapazität gegliedert alle Arten von Speichern einsetzbar; langsame seriell zugreifende Speicher lassen sich zu diesem Zweck vorübergehend in Speicher mit wahlfreiem Zugriff umladen.

Für bereits bekannte Eingangsnachrichten erfolgen keine weiteren Adresseinträge in den Speicher; jeweils ausgehend von einer definierten Startadresse, im allgemeinen am Stamm des Baumes, möglicherweise aber auch an einem definierten Verzweigungspunkt, wird der Speicher in zeichenweisen Schritten mit einer Adressenfolge durchlaufen und gelesen, die der bereits gespeicherte Adressverzweigungsbaum bestimmt, bis das letzte Zeichen der Eingangsnachricht schließlich eine letzte Speicherzelle des Adressverzweigungsbaumes aufruft, die - gewissermaßen als "Baumfrucht" - die der Eingangsnachricht zugeordnete umgesetzte Ausgangsnachricht oder deren Ablageadresse enthält. Das Umsetzen der Eingangsnachricht kann auch zeichenweise bereits während des Adressdurchlaufes erfolgen, indem den jeweils gelesenen Zellen zusätzlich zu den nächstfolgenden Verzweigungspunktadressen jeweils ein gespeichertes Zeichen der Ausgangsnachricht entnommen wird.

Die Erkennung, ob eine Eingangsnachricht neu ist, erfolgt irgendwann im Verlauf des Adressdurchlaufes durch den Adressverzweigungsbaum, wenn ein gerade anstehendes Zeichen der Eingangsnachricht mit seiner Verzweigungspunkt-Adressauswahl auf eine noch unbeschriebene Speicherzelle trifft. Ab hier sind jetzt alle weiterführenden Äste des Verzweigungsbaumes einzuspeichern, indem der Speicher in diese unbeschriebene Zelle eine der Anzahl Äste entsprechende Anzahl beliebiger, jeweils frei verfügbarer, unbeschriebener Adressen als Verzweigungspunktadressen einträgt, von denen dann eine bestimmte nächstfolgende Adresse von diesem gerade anstehenden Zeichen der Eingangsnachricht ausgewählt und gelesen wird und wiederum als unbelegte Zelle erkannt wird, und so fort. Zur Erkennung, ob eine jeweils aufgerufene Speicherzelle als unbeschriebene Zelle, als Verzweigungspunkt oder als Endpunkt bzw. vorläufiger Endpunkt einer Eingangsnachricht zu interpretieren ist, kann sie zusätzliche Kennungen speichern, die die jeweils daraus abzuleitenden Speicherabläufe entsprechend steuern. Ebenso kann sie z.B. zusätzlich zu den nachgeordneten Verzweigungspunktadressen die Adresse des jeweils vorgeordneten Verzweigungspunkts speichern, d.h. des Punktes, aus dem der jeweilige Ast entwachsen ist. Dies ermöglicht z.B. das Löschen nicht mehr relevanter Eingangsnachrichten, das von der Endadresse ausgehen muß. Für spätere Löschzwecke kann auch gleichzeitig mit Wachsen des Hauptbaumes ein Nebenbaum gespeist werden, der die jeweils in Klartext oder in eine relevante Information umgesetzte Eingangsnachricht in die jeweilige End- bzw. Ablageadresse umsetzt.

Das Wachstum des Speichers bzw. des Adressverzweigungsbaumes ist durch lineare Speichererweiterung beliebig erweiterbar. So sind z.B. für Eingangsnachrichten in blockweiser Binärzeichendarstellung bei n Bit Blocklänge für die Speicherung von m Eingangsnachrichten als Adressverzweigungsbaum bei m << 2ⁿ insgesamt A < 2 x n x m Speicheradressen erforderlich.

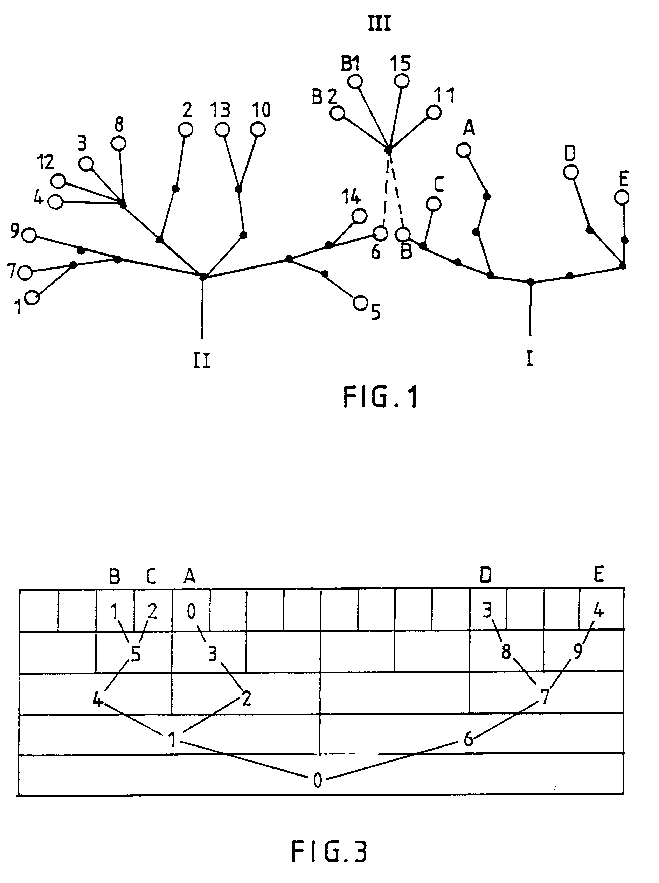

Fig. 1 zeigt das Prinzip in allgemeiner Darstellung. Dargestellt sind zwei z.B. in getrennten Speichern gewachsene Adressverzweigungsbäume I und II, die über jeweils einen Ast gemeinsam einen dritten Adressverzweigungsbaum III speisen. Ein Punkt kennzeichnet einen Verzweigungspunkt, ein Kreis den jeweiligen Endpunkt des Verzweigungsbaumes, d.h. dessen "Frucht". Der zeichenweise Informationsinhalt der Eingangsnachricht bestimmt die Anzahl der Äste in den Verzweigungspunkten; so wachsen die Bäume II und III mit vier möglichen Ästen je Verzweigungspunkt, während der Baum I bei binärer Eingangsnachricht und bitweiser Verarbeitung nur zwei Äste je Verzweigungspunkt bildet. Im allgemeinen werden infolge der Redundanz in den Eingangsnachrichten diese Verzweigungsbäume, wie auch in der Natur, nie vollständig sein: so trägt der Verzweigungsbaum II, der insgesamt 64 mögliche Endpunkte besitzt, nur 13 "Früchte", die insgesamt 12 Verzweigungspunktadressen und 13 Endadressen benötigen. Der Verzweigungsbaum I, der insgesamt 16 Endpunkte ermöglicht, trägt 5 Früchte, für die er 10 Verzweigungspunktadressen und 5 Endadressen benötigt.

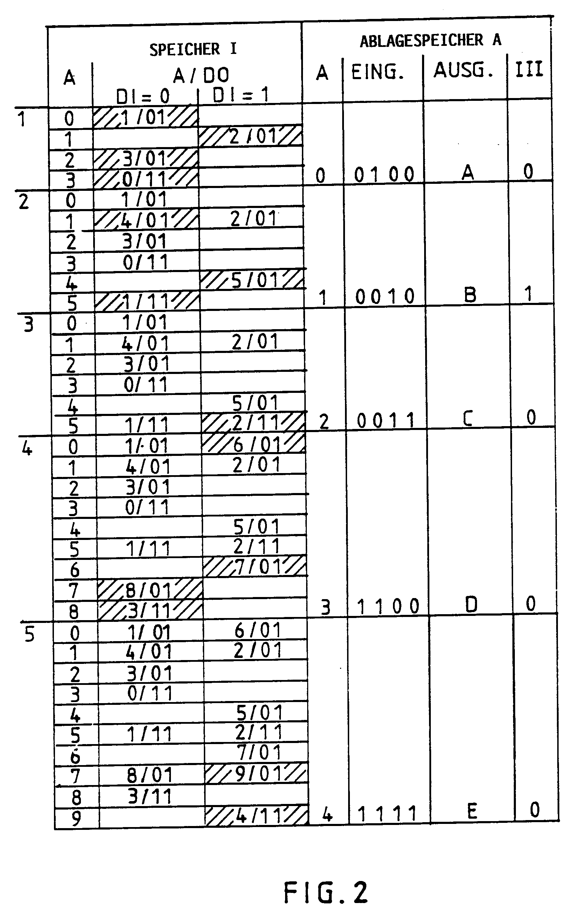

Fig. 2 zeigt als Anschauungsbeispiel für Eingangsnachrichten in Binärdarstellung mit einer Blocklänge von n = 4 Bit und bitweiser Verarbeitung als Tabelle I den Speicherinhalt eines solchen assoziativ mittels Adressverzweigungsbaum organisierten Speichers, wie er stufenweise mit m = 5 nacheinander eingetroffenen neuen Eingangsnachrichten gewachsen ist. Entsprechend den 5 nacheinander eingetroffenen und in einem Ablagespeicher A der Reihe nach abgelegten Eingangsnachrichten vollzieht sich das Wachstum des Adressverzweigungsbaumes in den 5 dargestellten Abschnitten; die je Abschnitt mittels Schreiboperation erfolgten neuen Adresseinträge sind schraffiert hervorgehoben. Jede beschriebene, d.h. belegte Zelle, speichert zwei alternative, als nächste aufzurufende Adressen des Speichers als Verzweigungspunktadressen, sowie eine Steuerkennung DO. Die Kennung DO kennzeichnet mit DO = 01 einen Verzweigungspunkt, d.h. eine Adresse im Speicher I, und mit DO = 11 einen Endpunkt, d.h. eine Ablageadresse im Ablagespeicher A. Unbeschriebene, d.h. unbelegte Zellen sind zur besseren Übersicht neutral dargestellt; in der Praxis wären sie durch entsprechende Kennungen, z.B. DO = 00 zu kennzeichnen.

Fig. 3 zeigt in schematischer Darstellung den Adressverzweigungsbaum des Speichers, wie er bis zum Abschnitt 5 binär gewachsen ist; dieser Verzweigungsbaum entspricht dem Baum I in Fig. 1. Die in Fig. 1 dargestellte Bildung eines neuen Verzweigungsbaumes III wird im Anschauungsbeispiel mittels einer im Ablagespeicher A hinterlegten zusätzlichen Kennung III realisiert, die z.B. kennzeichnet, daß die Eingangsnachricht eine weitere Verzweigung erfordert und die z.B. für die nachfolgenden Zeichen der Eingangsnachricht einen Speicher III für einen neu zu bildenden Adressverzweigungsbaum aktiviert. Dieses Prinzip der adressbezogenen Speichererweiterung ist insbesondere für Eingangsnachrichten mit sehr unterschiedlicher Zeichenanzahl von Vorteil.

Das beschriebene assoziative Speicherverfahren ist vorteilhaft für alle Anwendungsgebiete einsetzbar, die die Speicherung und den datengeschützten Zugriff auf geheime oder verschlüsselte Identitätsdaten erfordern. Identifizierende Nachrichten lassen sich nach diesem Prinzip im Speicherdurchlauf an vorgegebenen oder für jede Nachricht neu generierten Adressverzweigungsbäumen auswerten. Im direkten Speicherzugriff lassen sich umfangreiche Nachrichten, die die Identität eines Objektes, einer Person etc. beschreiben, in entsprechend zugeordnete Ausgangsnachrichten umsetzen; so z.B. für zu identifizierende Flugobjekte das Umsetzen einer Summe vieler Meßdaten, wie Geschwindigkeit, Richtung, Höhe etc. in entsprechende Identitätsdaten zwecks Flugverfolgung im Speicher. Oder das Umsetzen aller bekannten, die Identität einer Person beschreibenden Merkmale in zugeordnete Identitätsdaten, usw.

Im folgenden wird ein Ausführungsbeispiel der Identifizier- und Verschlüsselungseinrichtung anhand der Abbildungen Fig. 6 bis Fig. 13 näher erläutert. Es zeigen:
- Fig. 6:: Den als Fingerring gestalteten individuellen Datenträger.
- Fig. 7:: Schaltbild des individuellen Datenträgers mit daran angekoppeltem Auswerter.
- Fig. 8:: Impulsdiagramm des Signalverkehrs zwischen Datenträger und Auswerter.
- Fig. 9, 10:: Identifizierinformation des Datenträgers.
- Fig. 11,12:: Zuordnungsschlüssel des Datenträgers.
- Fig. 13:: Zuordnungstabelle für Anfrage- und Antwortnachrichten.

Fig. 6 zeigt als mechanisches Ausführungsbeispiel eines individuellen Datenträgers einen Fingerring im Schnitt, bestehend aus dem integrierten Schaltkreis D, der in einen Spalt zwischen zwei gegeneinander isolierten, mechanisch fest miteinander verbundenen Ringhälften 1 und 2 geschützt eingelassen ist. Die beiden elektrisch leitenden Ringhälften dienen der Kontaktgabe des integrierten Schaltkreises an den beiden Kontaktpunkten 3 und 4 des Auswerters.

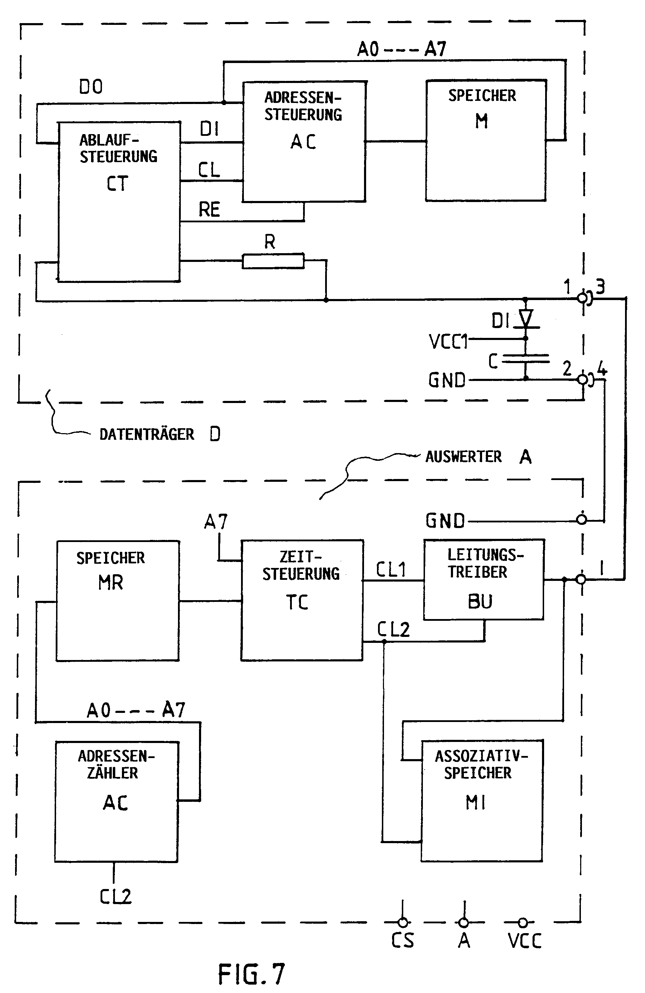

Fig. 7 zeigt das Schaltbild des individuellen Datenträgers D mit daran angekoppeltem Auswerter A; der Kontaktpunkt 1/3 dient der bitweisen Signalübertragung binärer Anfrage- und Antwortnachrichten, der Kontaktpunkt 2/4 liefert das Bezugspotential GND. Der als Anwendungsbeispiel beschriebene Auswerter wickelt Anfrage- und Antwortnachrichten autark, d.h. ohne nachgeschaltetes Auswertesystem ab, und ist dementsprechend für dezentrale Anwendungen wie Fahrzeug- und Wohnungstüren, etc. geeignet. Der als Beispiel beschriebene individuelle Datenträger ist dagegen universell einsetzbar. Er benötigt als integrierter Schaltkreis in CMOS--Technologie weniger als 4mm² Chipfläche und arbeitet wie folgt:

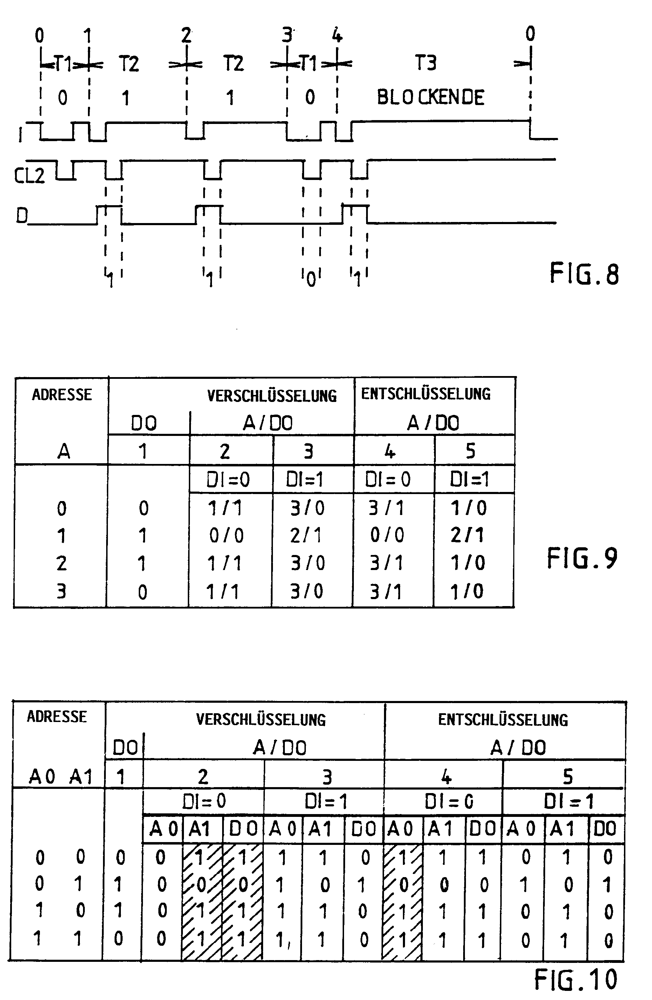

Mit Ankopplung des Datenträgers D über die Kontaktpunkte 1/3 und 2/4 an den Auswerter A laden zunächst während einer Zeitdauer von ca. 20 ms die Impulse der blockweise ständig wiederholten Anfragenachricht I des Auswerters über die Diode DI den Kondensator C als Energiespeicher für die Versorgungsspannung VCC1 auf und steuern sodann die Ablaufsteuerung CT. Diese Ablaufsteuerung mißt die Zeitabstände T1, T2, T3 zwischen den fallenden Flanken der Anfragenachricht (Fig. 8) und interpretiert diese Zeitabstände als Information "0" bzw. "1" der Nachricht oder als Kriterium "Blockende". Mit "Blockende" setzt sie mit dem Rücksetzsignal RE die Adressensteuerung AC auf eine definierte Startadresse zurück und adressiert damit eine erste Zelle des Festwertspeichers M, der z.B. in 256 Zellen zu je 9 Bit eine unbekannte Identifizierinformation enthält. Mit der nächsten fallenden Flanke 1 der Anfragenachricht I übergibt sie mit dem Übergabetakt CL das aus dem ersten Zeitabstand dieser Nachricht interpretierte erste Nachrichtenbit DI (im Beispiel eine "0) sowie die adressierten ersten Lesedaten A0 bis A7 des Festwertspeichers der Adressensteuerung AC zur Bildung der neuen Adresse, und adressiert somit zugleich abhängig von der Anfragenachricht und der Identifizierinformation eine zweite Zelle des Festwertspeichers M; zugleich übernimmt sie die ersten adressierten Ausgangsdaten DO und sendet sie über ein Entkoppelglied R an den Auswerter.

Die nächste fallende Flanke 2 der Anfragekennung bewirkt ebenso die Übernahme der zweiten gelesenen Ausgangsdaten DO sowie die Übergabe des zweiten Anfragebit DI (im Beispiel eine "1") und der zweiten Lesedaten A0 bis A7 an die Adressensteuerung und adressiert somit eine dritte Zelle des Festwertspeichers M; und so fort. Auf diese Weise werden von einer Anfragenachricht mit n = 256 Bit Blocklänge n = 256 Lesedatenworte zu je 9 Bit aus dem Festwertspeicher gelesen, von denen die 8 Bit A0 bis A7 der internen Selbstadressierung des Festwertspeichers dienen. Das neunte Bit DO sendet der Datenträger über ein Entkoppelglied R als Antwortnachricht mit insgesamt n = 256 Bit an den Auswerter, der diese Antwortbit mit dem Taktsignal CL2 empfängt, indem er seinen Leitungstreiber BU bitweise "Tristate" schaltet, d.h. von einem niederohmigen in einen hochohmigen Zustand bringt. Diese Antwortbit sind am Ausgang des Festwertspeichers M, bezogen auf die fallende Flanke der Anfragenachricht, nach einer gewissen Zugriffszeit gültig bis zur nächsten fallenden Flanke, werden jedoch vor dem Entkoppelglied R von der Anfragenachricht überdeckt, bis diese den Zustand "Tristate" einnimmt. Die Zuordnungsrichtung Verschlüsseln/Entschlüsseln nach einem kennzeichnenden Merkmal der Ansprüche 3 und 11 kann der Auswerter z.B. durch das in der Anfragenachricht enthaltene Blockendekriterium bestimmen, wenn hierfür zur Unterscheidung zwei definierte Zeitabstände vorgesehen werden; z.B. T3 = 2 T2 = 4 T1 und T4 = 2 T3. Die Ablaufsteuerung CT setzt diese Zeitabstände in ein entsprechendes Steuersignal um, das die Zuordnungsrichtung des Datenträgers steuert.

Fig. 8 zeigt den Signalverkehr zwischen Datenträger und Auswerter. Für die zu messenden Zeitabstände T1, T2 und T3 läßt sich die Ablaufsteuerung CT des Datenträgers bei festgelegten Zeitverhältnissen (im Beispiel T3 = 2 T2 = 4 T1) selbstkalibrierend auslegen, indem sie z.B. mittels Taktgenerator und Zähler diese Zeitintervalle auszählt und Zählergebnis mit zugehöriger Definition als Auswertereferenz in einem Register oder Speicher hinterlegt. Zusätzliche Sondersignale lassen sich entsprechend realisieren.

Der ebenfalls als integrierter Schaltkreis in CMOS-Technologie ausführbare Auswerter A arbeitet wie folgt:

Ein mit einem Takt CL2 betriebener Adresszähler AC adressiert fortlaufend den seriell 256 x 1 organisierten Festwertspeicher MR, der als beliebige Zufallsinformation in 256 Zellen die auswerterindividuelle Anfragenachricht des Auswerters speichert. Eine Zeitsteuerung TC setzt mittels der Taktsignale CL1 und CL2 über einen Leitungstreiber BU die einzelnen Bit dieser Anforderungsnachricht in die Zeitintervalle T1 bzw. T2 um (Fig. 8) und beendet, durch die Adresse A7 gesteuert, jeden der fortlaufend wiederholten Nachrichtenblöcke mit dem Zeitintervall T3, d.h. mit dem Kriterium "Blockende". Ein nach den kennzeichnenden Merkmalen der Ansprüche 8 und 22 für assoziative Nachrichten-Speicherung ausgelegter Speicher M1 empfängt jeweils bitweise bei Abschalten des Leitungstreibers BU mit der Rückflanke des Taktsignals CL2 die Antwortnachricht des Datenträgers und speichert damit bitweise in einer Urleseprozedur einen Adressverzweigungsbaum, sowie an dessen Endpunkt die jeweiligen zugeordneten Identitätsdaten, oder auch einfache Steuersignale, wie z.B. eine Schließberechtigung für Fahrzeug, Wohnungstür, etc. Diese Steuerdaten CS sowie evtl. zugehörige Ablageadressen A dienen dann der Auslösung bzw. Steuerung identifizierabhängiger Vorgänge.

Derartige Urleseprozeduren mittels selbstprogrammierender Auswerter ermöglichen dem Benutzer selbst eine sehr einfache, sofortige Anpassung der Auswerter an neu aufzunehmende individuelle Datenträger; lediglich die Programmierberechtigung muß erteilt werden. Anstelle einer Schlüsselübergabe, wie sie z.B. bei Kauf oder Mieten von Kraftfahrzeugen, Wohnungen etc. erfolgt, tritt die Urleseprozedur eines Datenträgers.

In größeren Systemen mit einer Vielzahl von Benutzern, z.B. in Banksystemen, erfolgt die Identifizierung zweckmäßig schrittweise: Bei Kontoeröffnung ermittelt die Bank durch "Urlesen" des kundenindividuellen Datenträgers mittels einer Standardanfragenachricht (z.B. Bankleitzahl) eine erste Antwortnachricht des Kunden, die einem im EDV-System der Bank eingebundenen, nach den kennzeichnenden Merkmalen der Ansprüche 8 und 22 ausgelegten Speicher adressiert und aus diesem eine kundenindividuelle Anfragenachricht liest. Mittels dieser individuellen Anfragenachricht ermittelt die Bank durch ein zweites Urlesen des Datenträgers eine zweite Antwortnachricht des Kunden, oder auch mehrere, die zeichenweise assoziativ schließlich das Kundenkonto oder dessen Ablageadresse adressieren. Künftig wird dann der Auswerter in einem ersten Schritt, z.B. mittels Bankleitzahl, die kundenindividuelle Anfragenachricht ermitteln, und im zweiten Schritt mittels dieser individuellen Anfragenachricht die Identifizierung vornehmen.

Die im Beispiel gewählte Nachrichtenblocklänge von 256 Bit ermöglicht 2²⁵⁶, d.h. ca. 10⁷⁵ unterschiedliche Anfrage- und Antwortnachrichten. Diese unvorstellbar hohe Anzahl möglicher Nachrichten bewirkt, daß ein unberechtigtes Aufspüren einer Antwortnachricht oder der Identifizierinformation des Datenträgers durch Probieren auch mit modernsten Datenverarbeitungsanlagen völlig unmöglich ist.

Fig. 9 und 10 zeigen für dieses Beispiel binärer, bitweiser Umschlüsselung die Identifizierinformation des Datenträgers, wobei zur überschaubaren Darstellung die Nachrichtenblocklänge auf 4 Bit und die Kapazität des Festwertspeichers auf 4 Zellen reduziert ist; Fig. 9 zeigt diese in den 4 Zellen hinterlegte Identifizierinformation in einer zur Fig. 4 analogen Darstellung:

Das Adressbit A0 teilt den Speicher in zwei Hälften; zur Verschlüsselung speichert eine Hälfte des Speichers (Adressen 0, 1) in Spalte 1 eine beliebige Zufallsinformation als Ausgangsdaten DO und die entsprechenden Adressen 2, 3 der anderen Speicherhälfte die hierzu inverse Information DO. Außerdem speichert jede Zelle sowohl für das Verschlüsseln (Spalten 2 und 3) als auch für das Entschlüsseln (Spalten 4 und 5) jeweils 2 beliebige Adressen A mit jeweils zugeordneten, unterschiedlichen Ausgangsdaten DO, von denen eine Adresse durch das jeweils anstehende Bit der Eingangsdaten DI ausgewählt und gelesen wird.

Fig. 10 zeigt die aus Fig. 9 umgesetzte vollständige Binärdarstellung der Identifizierinformation mit 13 Bit je Speicheradresse. Diese zur Verdeutlichung des Prinzips dargestellten 13 Bit lassen sich auf die schraffiert dargestellten 3 Bit je Speicheradresse reduzieren wegen nachfolgender logischer Verknüpfungen:
DO′ = DO /EXOR/ DI (EXOR-Verknüpfung)
A0′ = DI beim Verschlüsseln
A0′ = A0 /EXOR/ DI (EXOR-Verknüpfung) beim Entschlüsseln.
Die beiden unterschiedlichen Verknüpfungen für A0′ bestimmen allein die Zuordnungsrichtung, d.h. die Umschaltung Verschlüsseln/Entschlüsseln erfolgt allein durch entsprechende Umschaltung der Verknüpfung A0/DI.

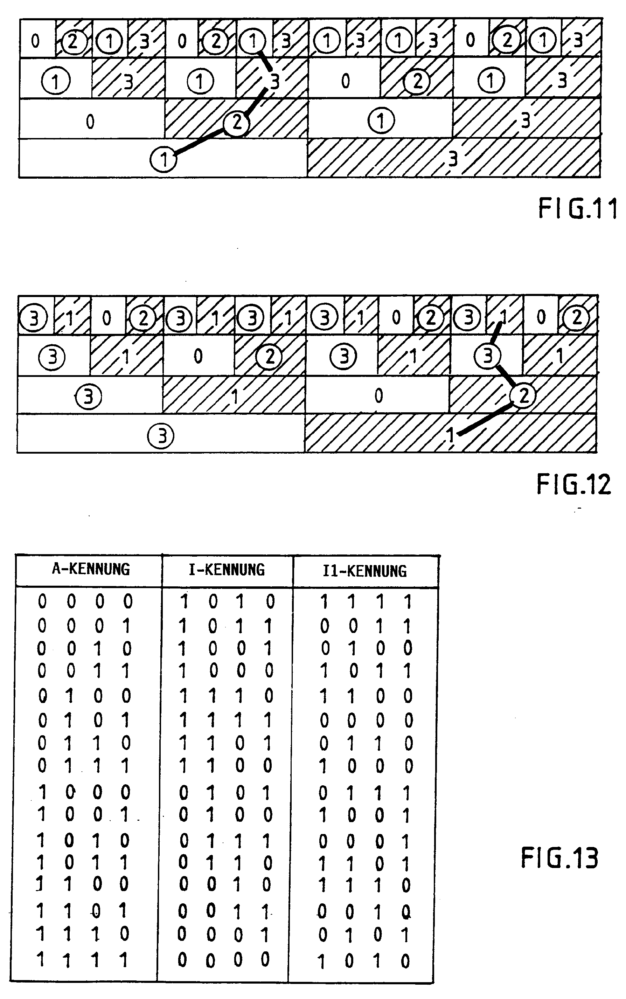

Fig. 11 und 12 zeigen, ausgehend von der Startadresse O des Festwertspeichers, schematisch das Adressverzweigungsgeflecht für beide Zuordnungsrichtungen dieses Datenträgers, wie es sich aus der in Fig. 10 dargestellten Identifizierinformation des Festwertspeichers ergibt. Die durch DI = 1 adressierten Zellen sind schraffiert dargestellt; ein Kreis kennzeichnet die Zellen, die als Ausgangsdaten DO eine "1" speichern. Die in Fig. 8 als Impulsdiagramm dargestellte Anfragenachricht "0 1 1 0" bewirkt beim Verschlüsseln den in Fig. 11 markierten Durchlauf durch die Zellen 1 - 2 - 3 - 1 des Festwertspeichers und damit die Bildung der zugeordneten Antwortnachricht "1 1 0 1". Beim Entschlüsseln bewirkt diese Nachricht "1 1 0 1" den in Fig. 12 markierten gleichen Durchlauf durch die Zellen 1 - 2 - 3 - 1 des Festwertspeichers und damit die Rückgewinnung der ursprünglichen Nachricht "0 1 1 0". Bei diesem Umschlüsselverfahren zwischen der Anfrage- und der Antwortnachricht bleibt die eigentliche Identifizierinformation des Datenträgers unbekannt; feststellbar ist nur die jeweils für eine bestimmte Anfragenachricht aus 2ⁿ möglichen Nachrichten an der Identifizierinformation assoziierte Antwortnachricht.

Fig. 13 zeigt für das beschriebene Anschauungsbeispiel mit einer Nachrichtenblocklänge von n = 4 die aus dem Adressverzweigungsgeflecht Fig. 11 abgeleitete Tabelle der 2ⁿ = 16 möglichen Zuordnungen zwischen Anfragenachricht und Antwortnachricht. Eine entsprechende Tabelle läßt sich aus dem Adressverzweigungsgeflecht Fig. 12 für die inverse Zuordnungsrichtung ableiten, die sich aber auch durch Vertauschen von Anfrage- und Antwortnachricht aus der Tabelle Fig. 13 gewinnen läßt.

Diese Zuordnung läßt sich nach einem kennzeichnenden Merkmal der Ansprüche 4 und 12 beliebig verändern, indem die Antwortnachricht vor Ausgabe an den Auswerter dem Datenträger intern nach Zwischenspeicherung mehrmals erneut eingegeben wird - maximal 2ⁿmal, ggf. auch bei Umkehrung der Bitfolge.

Fig. 13 zeigt in der Spalte I1.-Kennung als Beispiel die nach dem ersten Durchlauf durch Zwischenspeicherung und Umkehrung der Bitfolge in einem zweiten Durchlauf gewonnene Antwortnachricht; auch Anfragenachrichten, die sich nur im letzten Bit unterscheiden, sind hierbei über ihre Antwortnachrichten nicht mehr korrelierbar, so daß diese Datenträger auch als Pseudozufallsdatengeneratoren nutzbar sind. Ein Durchspielen aller möglichen Kennungen, auch mit schnellsten künftigen Rechnern, ist für die im Beispiel tatsächlich vorgesehene Nachrichtenblocklänge mit einem Zuordnungsschlüssel von 2²⁵⁶ möglicher Kennungen unmöglich.

Die Eigenschaft der beschriebenen Identifizierdatenträger, die Identität in einem Schlüssel festzulegen, an dem beliebige Nachrichten eines Codes zugeordnete Nachrichten eines anderen Codes reflektieren, macht sie für alle Anwendungen nutzbar, die in irgendeiner Form Identifizierungen, z.B. als Berechtigungsnachweis oder identitätsabhängige Verschlüsselungen, z.B. für Datenschutz und Datenübertragung, erfordern. Im folgenden werden einige dieser Nutzungsmöglichkeiten angeführt, die insgesamt beim Benutzer nur ein und denselben individuellen Datenträger erfordern:

Verschiedene Nutzungsmöglichkeiten bietet das Telefon; so lassen sich die individuellen Datenträger wie Telefonschlüssel als Berechtigungsnachweise verwenden; in Verbindung mit entsprechenden Gebührenzählern ermöglichen sie für Privatfernsprecher eine benutzerselektive Gebührenzählung; als Identitätsnachweis können sie der Weiterleitung von Telefonanrufen zum jeweiligen Aufenthaltsort und dem telefonischen Abruf persönlicher, vom Anrufbeantworter aufgezeichneter Mitteilungen dienen. Schließlich ließe sich mittels dieser Datenträger von beliebigen privaten oder öffentlichen Fernsprechapparaten aus bargeldlos telefonieren, wenn Antwortnachricht und Gebühr an zentrale Fernsprechkonten übertragen und mit der monatlichen Fernsprechrechnung abgerechnet werden.

Vielfältige Anwendungsmöglichkeiten bieten alle Arten von Schließsystemen in Verbindung mit elektromechanischen Schlössern: Derselbe individuelle Datenträger öffnet Kraftfahrzeug-, Haus- und Wohnungstüren, Tresore, Briefkästen, Schränke, Schreibtische, Schranken in Kraftfahrzeug-Parkhäusern, Bedienungssperren von Maschinen, direkt- und fernwirkend Garagentore, etc. In Verbindung mit geeigneten Auswertesystemen lassen sich für die individuellen Datenträger zeitlich begrenzte Berechtigungen realisieren, z.B. Tages- oder Wochenbegrenzung bei automatischen Skiliftanlagen, tageszeitabhängige Zutrittsberechtigung zu Betrieben usw. Der praktisch unbegrenzte Vorrat möglicher Anfragenachrichten ermöglicht einen Wechsel der Nachricht nach jeder Benutzung.

Die Kontrolle und Überwachung von Personen und Einrichtungen bietet weitere Anwendungen:

So lassen sich mittels der individuellen Datenträger die z.Zt. mit Codewörtern realisierten, hierarchisch gestuften Zugriffs- und Bedienberechtigungen für Datenverarbeitungsanlagen realisieren; ebenso die Bedienberechtigung für militärisches Gerät. Sicherheitsrelevantes Transportgut läßt sich mittels dieser Datenträger überwachen und gegen Handhabung durch Unberechtigte absichern.

Da die Identifizierbasis des Datenträgers bei entsprechender Realisierung absolut geheim, fälschungssicher und nicht kopierbar ist, besitzt der Datenträger unverkennbare, überprüfbare Echtheitsmerkmale, die ihm relevante Anwendungsgebiete wie z.B. fälschungssichere Ausweise, Zahlungsmittel etc., erschließen. Durch zusätzliche Aufnahme persönlicher Daten und digitalisierter unveränderlicher persönlicher Merkmale, wie Fingerpapillarlinien etc. in die Antwortnachricht läßt sich nach einem kennzeichnenden Merkmal des Anspruchs 20 ein überprüfbarer eindeutiger Bezug zwischen Person und Datenträger herstellen, womit der individuelle Datenträger als fälschungssicherer Ausweis verwendbar ist.

Schließlich läßt sich der individuelle Datenträger anstelle der Scheckkarten als Identifiziermittel im Zahlungsverkehr verwenden. Mit einem zusätzlichen lösch- und wiederbeschreibbaren Speicher nach einem kennzeichnenden Merkmal des Anspruchs 24, der von bestimmten Zahlungsempfängern wie Post, Verkehrsbetrieben etc. in jeweils zugeordneten Speicherbereichen mit einem Guthabenbetrag ladbar ist, kann er für diese Zahlungsempfänger auch als direktes Zahlungsmittel dienen.

Die Eigenschaft des Datenträgers, die assoziative Datenumschlüsselung ohne Preisgabe des Schlüssels nach einem kennzeichnenden Merkmal der Ansprüche 3 und 11 wahlweise für beide Zuordnungsrichtungen zu ermöglichen, erschließt ihm vielfältige Anwendungen auf dem Gebiet des Datenschutzes, des Kopierschutzes und der Datenverschlüsselung.

Für Zwecke der Geheimhaltung, des Datenschutzes oder des Kopierschutzes lassen sich nach einem kennzeichnenden Merkmal des Anspruchs 16 die jeweiligen Datenmedien (Floppy Disk, Kassette, Band, Compact Disk, etc.) mit derartigen individuellen, als Verschlüssler dienenden Datenträgern versehen - z.B. als Halbleiterchip aufgeklebt auf der Floppy Disk-Hülle -, die bei Aufnahme die Daten individuell verschlüsseln und bei Wiedergabe wieder entschlüsseln. Der Verschlüssler dient hier als fälschungssicheres, individuelles Echtheitsmerkmal des Urhebers, ohne das eine Datenwiedergabe oder Kopie nicht möglich ist. Computer-Software, digitale Audio- und Video-Aufzeichnungen, dem Datenschutz unterliegende Aufzeichnungen, etc. lassen sich damit sicher gegen Kopieren schützen. Sie sind zusätzlich auch gegen Mißbrauch und Diebstahl geschützt, wenn Datenmedium und "Schlüsselträger" getrennt aufbewahrt werden. Von besonderem Vorteil für diese Anwendungen sind die miniaturisierte, aufwandsarme, nur zwei Kontaktpunkte erfordernde Gestaltung des Schlüsselträgers.

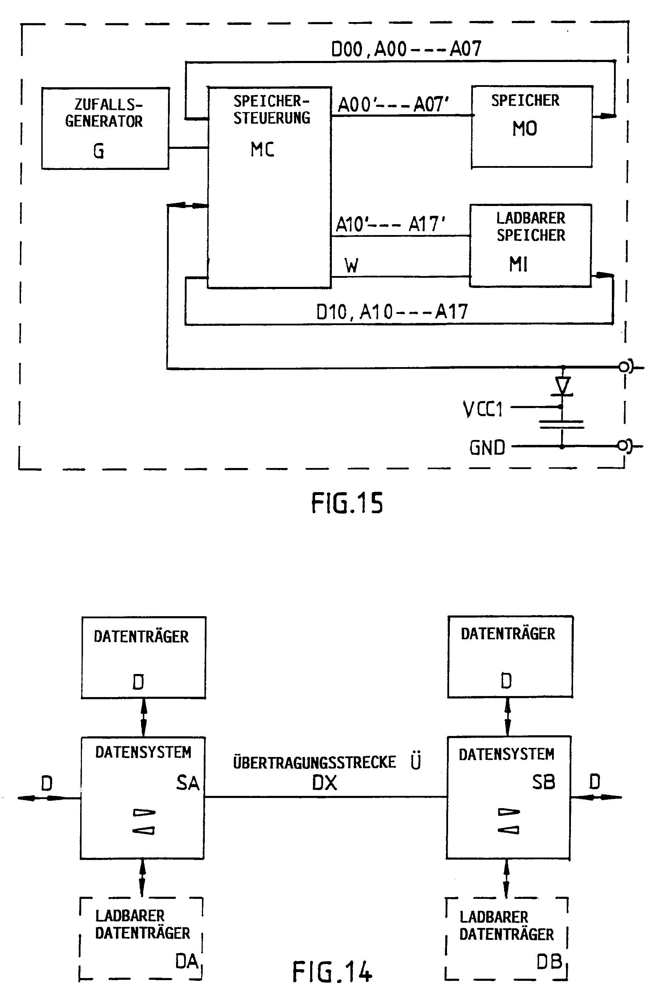

Ein weiteres Anwendungsgebiet ist die Übertragung verschlüsselter, fälschungssicherer Daten nach einem kennzeichnenden Merkmal der Ansprüche 6 und 14. Personen und/oder Objekte, die eine gleiche, Dritten völlig unbekannte und unzugängliche Identifizierinformation besitzen, können untereinander mittels dieser gemeinsamen Identifizierbasis verschlüsselte Daten bzw. Nachrichten austauschen, die Dritten absolut verschlossen bleiben. Fig. 14 zeigt eine solche Anwendung der Identifizierdatenträger für verschlüsselte Datenübertragung: Zwei Datensystemen SA, SB, die über eine Übertragungsstrecke Ü miteinander verschlüsselte Daten DX austauschen, sind jeweils Identifizierdatenträger D entsprechend Fig. 7 mit gleicher Identifizierinformation zugeordnet, die in der oben für Fig. 7 beschriebenen Weise die Verschlüsselung D-Dx bzw. die Entschlüsselung Dx-D der Daten bewirken.

Datenträger, die nicht ortsfest, an bestimmte Systeme gebunden, sondern universell für viele unterschiedliche Anwendungen umschlüsseln, müssen jede Umschlüsselprozedur mit einer definierten Startadresse beginnen, von der ausgehend gleiche unverschlüsselte Daten stets wieder die gleichen verschlüsselten Daten erzeugen, wodurch die Möglichkeit der Datenaufzeichnung zwecks späterer Simulation besteht. Diese Möglichkeit läßt sich nach einem kennzeichnenden Merkmal der Ansprüche 5 und 13 durch fortlaufende, sporadische oder blockweise Veränderung der Identifizierbasis unterbinden. In einer Weiterbildung der Erfindung bewirkt diese Veränderung eine mittels Zufallsdatengenerator z.B. vom verschlüsselnden Datenträger erzeugte Kennung, die zwischen den Datenträgern verschlüsselt übertragen wird und die durch Verknüpfung, z.B. Addition, mit den der Selbstadressierung dieser Datenträger dienenden, schrittweise erzeugten Adressbit, im Beispiel Fig. 7 Adressbit A0 bis A7, die Identifizierbasis, d.h. das Verzweigungsgeflecht der Datenträger, verändert.

Eine andere Lösung, die Identifizierbasis für die Umschlüsselung zu verändern, bietet die Kombination einer festen Identifizierbasis mit einer ladbaren, z.B. als Lese-Schreib-Speicher realisierten Identifizierbasis, deren vollständige oder teilweise Identifizierinformation nach kennzeichnenden Merkmalen der Ansprüche 2 und 10 beliebig aus Zufallsdatengeneratoren nachgeladen und zwischen Sender und Empfänger mittels der festen Identifizierbasis oder dem jeweils zuvor gebildeten Schlüssel übertragen wird. Hierbei kann die Identifizierbasis beliebig wechseln, so daß die Periodenlänge dieser Verschlüsselung unbegrenzt ist; sich wiederholende unverschlüsselte Datenblöcke erzeugen keine sich wiederholenden, verschlüsselten Datenblöcke, wenn hierfür echte Zufallsdaten, z.B. mittels Rauschgeneratoren, erzeugt werden. Dieses Verfahren ist absolut sicher gegen Aufzeichnen und späteres Simulieren des Datenverkehrs, da bei genügender Datenblocklänge jede Datenübertragung einmalig wegen des nur einmal verwendeten Schlüssels ist.

Als Beispiel für eine Datenübertragung nach diesem Verfahren zeigt Fig. 14 zusätzliche ladbare Identifizierdatenträger DA, DB. Vor Beginn der Datenübertragung speichern beide Datenträger DA, DB beliebige, voneinander verschiedene Zufallsdaten. Mit Beginn der Übertragungsprozedur liest z.B. das System SA die erste Zelle des Datenträgers DA, verschlüsselt diese Lesedaten über die feste Identifizierbasis D und überträgt sie zum System SB, welches diese Daten über die feste Identifizierbasis D entschlüsselt und in die erste Zelle des Datenträgers DB lädt. Sodann wiederholt System SB diese Prozedur mit Zelle 2 seines Datenträgers DB, dessen Daten daraufhin in Zelle 2 des Datenträgers DA geladen werden, und so fort, d.h. es erfolgt ein wechselseitiger, über die gemeinsame feste Identifizierbasis D verschlüsselter Datenaustausch beider Systeme mit einer gemeinsamen, gleichen Identifizierbasis in den Datenträgern DA, DB als Ergebnis. Diese gemeinsame Identifizierbasis verschlüsselt bzw. entschlüsselt sodann den im Anschluß zu übertragenden Datenblock, nach dessen Übertragung dann auf die beschriebene Weise mittels Zufallsdaten eine neue Identifizierbasis in den Datenträgern DA, DB erzeugt wird, mit dem sodann der nächste Datenblock übertragen wird, usw. Der durch die zusätzliche Schlüsselübertragung bedingte Verlust an Datenübertragungsgeschwindigkeit läßt sich vermeiden, wenn der jeweils übertragene Nutz-Datenblock selbst durch entsprechende Umschlüsselung den Schlüssel für den nächsten Nutz-Datenblock generiert. Die in Fig. 14 getrennt dargestellten, festen und ladbaren Datenträger D/DA bzw. D/DB können auch als Kombination auf einem gemeinsamen Datenträger zu einer Identifiziereinheit zusammengefaßt werden (Fig. 15).

Diese abhörsichere, absolut fälschungssichere, nicht simulierbare verschlüsselte Datenübertragung erschließt dem Identifizierdatenträger vielfältige Anwendungsmöglichkeiten in allen Arten des Datenverkehrs, so z.B. für Btx-, Telefax-, Fernschreib-, Fernsprechverkehr etc.; u.a. ermöglicht sie für den Zahlungsverkehr variable Zahlungsmittel, die nach einem kennzeichnenden Merkmal des Anspruchs 24 in direktem Datenverkehr miteinander, d.h. vor Ort ohne Umweg über eine Zentrale Zahlungsbeträge miteinander wechseln können. Dabei dient die fälschungssichere, unbekannte, allen diesen Zahlungsmitteln zugeordnete gemeinsame Identifizierinformation, die allein den Datenverkehr und damit den Zahlungstransfer dieser Zahlungsmittel verschlüsselt und freigibt, als überprüfbares Echtheitsmerkmal, ähnlich wie z.B. die spezifischen Merkmale der Geldscheine. Diese Überprüfung können gegenseitig direkt die beteiligten Zahlungsmittel vornehmen. Dies ist vor allem für den Einzelhandel von Vorteil, der mittels derartiger variabler Zahlungsmittel wie bisher üblich eine Kundenbörse-Ladenkasse-Zahlung abwickeln kann: An die Stelle der Kundenbörse und der Ladenkasse tritt jeweils ein solches variables Zahlungsmittel; das Kassengerät selbst dient dabei lediglich als Eingabetastatur und Anzeigegerät, ohne Kenntnis des Datenübertragungsschlüssels. Dieser Datenübertragungsschlüssel wird als "Einmalschlüssel" - wie schon beschrieben - über die gemeinsame Identifizierbasis mittels Zufallsdatengeneratoren für jeden Transfer von beiden Zahlungsmitteln, Sender und Empfänger, jeweils neu generiert, so daß eine Aufzeichnung und nachfolgende Simulierung, d.h. Wiederholung der Datenübertragungen zwischen den Zahlungsmitteln wirkungslos ist. Ein Fälschen des Zahlungstransfers durch Probieren läßt sich durch entsprechende hohe Datenblocklänge für den Transfer unterbinden.

Der Datenverkehr zwischen den Zahlungsmitteln vollzieht sich im Prinzip wie in Fig. 14 dargestellt, wobei die Datenträger D/DA und D/DB durch die beiden Zahlungsmittel und die Übertragungssysteme SA, SB durch die Ladenkasse bzw. ein entsprechendes Eingabe-/Anzeigegerät realisiert werden, das auch die Betriebsenergie für den Datenverkehr liefert. Zur funktionellen Absicherung des Zahlungstransfers empfiehlt sich ein Datenverkehr mit gegenseitiger Quittierung; ggf. wird der Transfer zunächst widerrufbar abgewickelt und erst mit der Quittierung vollzogen. Die Anordnung nach Fig. 14 ermöglicht mittels zweier Eingabe-/ Anzeigegeräte SA und SB ebenso die Fernübertragung von Zahlungsbeträgen und damit das Wiederauffüllen eines solchen Zahlungsmittels zu beliebigen Zeiten an beliebigen Orten durch Datenfernverkehr mit anderen dieser Zahlungsmittel.

In Verbindung mit dem oben beschriebenen, persönlichen Identifizierdatenträger sind diese Zahlungsmittel gegen Diebstahl oder Verlust absicherbar: So sind sie z.B. mit Antwortnachrichten aufschließbar, die nur ein oder mehrere berechtigte Identifizierdatenträger liefern. Die Möglichkeit, Beträge unterschiedlicher Währungen in das Zahlungsmittel aufzunehmen, ermöglicht seine Anwendung auch im internationalen Zahlungsverkehr; dabei können die Eingabe-/Anzeigegeräte das Umrechnen und Übertragen der Währungsbeträge vornehmen.

Die für Fig. 14 beschriebenen Prozeduren für verschlüsselte Datenübertragung setzen eine gemeinsame Identifizierbasis der beteiligten Systeme voraus; diese gemeinsame Basis ist z.B. bei personenbezogenen, völlig individuellen, einmaligen Identifizierdatenträgern nicht gegeben. Hier bietet nach kennzeichnenden Merkmalen der Ansprüche 5 und 13 eine mit der festen Identifizierbasis auf dem Datenträger kombinierte, alternativ anschaltbare, ladbare Identifizierbasis die Möglichkeit, aufgrund einer vorherigen Urleseprozedur gemeinsame Schlüssel zu bilden. Derartige Schlüsselbildungen lassen sich z.B. für einen verschlüsselten Datenverkehr zwischen Bank und Kunden bewirken, indem die Bank mittels erstmaliger Urleseprozedur über beliebige Anfragenachrichten entsprechende kundenindividuelle Antwortnachrichten aus dem Datenträger des Kunden liest, gegebenenfalls unter Umkehrung der Zuordnungsrichtung, die zu Beginn eines späteren Datenverkehrs unverschlüsselt in die bankeigene Identifizierbasis geladen werden und verschlüsselt an den Datenträger des Kunden übertragen und, über dessen feste Identifizierbasis entschlüsselt, in dessen ladbare Identifizierbasis geladen werden. Aufbauend auf dieser jetzt gemeinsamen Identifizierbasis können zwischen Bank und Kunden beliebige, mittels Zufallsdaten generierte Schlüssel und entsprechend verschlüsselte Daten ausgetauscht werden, wie oben beschrieben, wobei dieser Datenaustausch abhörsicher und nicht simulierbar ist und grundsätzlich den echten Identifizierdatenträger voraussetzt. Ebenso lassen sich neue Identifizierbasen übertragen. Das Verfahren ist nicht auf zwei Kommunikationspartner bzw. -Systeme beschränkt, es ermöglicht ebenso den verschlüsselten Datenaustausch innerhalb größerer Gruppen, wenn die Teilnehmer sich zuvor z.B. in direktem persönlichen Kontakt auf mindestens eine gemeinsame Antwortnachricht festgelegt haben, die mittels der jeweils zugeordneten, individuell verschiedenen Anfragenachricht an jeden Teilnehmer übertragbar ist. Diese gemeinsame Festlegung kann auch nacheinander erfolgen, z.B. durch schrittweise Übertragung der gemeinsamen Antwortnachricht zwischen den jeweils "miteinander bekannten" Teilnehmern A/B, B/C, C/D etc., wenn diese "miteinander bekannten" Teilnehmer jeweils eine gemeinsame Identifizierbasis haben. Auf diese Weise können Gruppenmitglieder auch neue, ihnen bekannte Teilnehmer in die Gruppe aufnehmen. Schließlich sind durch entsprechende Festlegungen auf mehrere Antwortnachrichten innerhalb solcher Gruppen auch hierarchisch gestaffelte Schlüssel realisierbar. Auch sind voneinander unabhängige Sende- und Empfangsschlüssel möglich, z.B. für selektive Entschlüsselungsberechtigungen innerhalb einer Gruppe.

Fig. 15 zeigt als Beispiel das Schaltbild eines Identifizierdatenträgers, der die oben beschriebene Grundfunktion der festen Identifizierbasis mit der beschriebenen Weiterbildung zu einer geschlossenen Identifiziereinheit zusammenfaßt:

Ein Festwertspeicher MO enthält die individuelle, geheime unveränderbare Identifizierbasis. Ein nur für die Dauer des Datenverkehrs benötigter, ladbarer Lese-Schreib-Speicher M1 läßt sich zur Bildung gemeinsamer Identifizierbasen mit verschlüsselt übertragener, in MO umgeschlüsselter Identifizierinformation laden, wobei alle Abläufe beider Speicher durch die Speichersteuerung MC gesteuert werden. Ein Generator G erzeugt Zufallsdaten, die ebenfalls den Speicher M1 laden und die über MO verschlüsselt zur Bildung einer gemeinsamen Identifizierbasis an die Gegenseite gesendet werden.

Diese Identifiziereinheit ermöglicht alle oben beschriebenen Funktionen der Identifizierung, des Datenschutzes, sowie des verschlüsselten Datenverkehrs zwischen Personen und Objekten.

### Literaturhinweise

[1] L.E. Stanfel
   "Practical aspects of doubly chained trees for retrieval"
   Journal of the Association for Computing Maschinery; Vol.19, No. 3, Juli 1972, Seiten 425-430
[2] Lewis/Smith
   "Datenstrukturen und ihre Anwendung"
   1978 R. Oldenbourg Verlag, München
[3] J. Niedereichholz
   "Datenbanksysteme, Aufbau und Einsatz"
   1981 Physica Verlag, Wien

## Patentansprüche

1. Verfahren zur Umschlüsselung einer Eingangsnachricht in eine Ausgangsnachricht, wobei eine Eingangsnachricht zeichenweise verarbeitet wird und wobei Zeichen der Ausgangsnachricht von mehreren Zeichen der Eingangsnachricht abhängig sind,
**gekennzeichnet durch**
- ein Verzweigungsgeflecht aus miteinander über Äste vernetzten Knoten, bei dem je Knoten eine Anzahl Äste zu beliebigen Knoten des Verzweigungsgeflechtes bestehen und wobei den Ästen und/oder den Knoten gespeicherte Umschlüsselinformationen zugeordnet sind,
- eine abhängig von Zeichen der Eingangsnachricht und ausgehend von einem ausgewählten Knoten vorgenommene Selektierung eines jeweiligen Astes zur Auswahl eines nachfolgenden Knotens zwecks Erzielung eines schrittweisen Selektierdurchlaufs durch das Verzweigungsgeflecht, der eine Eingangsnachricht beliebiger Länge in einen individuellen Selektierpfad umsetzt, wobei dieselben Knoten auf diesem Selektierpfad mehrfach durchlaufen werden können und
- die Bildung von Zeichen der Ausgangsnachricht in Abhängigkeit von gespeicherten Umschlüsselinformationen der auf dem Selektierpfad durchlaufenen Äste und/oder Knoten des Verzweigungsgeflechtes.

2. Verfahren nach Anspruch 1,
**dadurch gekennzeichnet,**
daß die Zuordnung der Knoten und/oder die Umschlüsselinformationen in Abhängigkeit von Zufallsereignissen eines Zufallsverfahrens festgelegt sind.

3. Verfahren nach Anspruch 1 oder 2,
**dadurch gekennzeichnet,**
daß Umschlüsselinformationen für einander entgegengesetzte Umschlüsselrichtungen zugeordnet sind.

4. Verfahren nach einem oder mehreren der Ansprüche 1 bis 3,
**dadurch gekennzeichnet,**
daß die Zeichen der Ausgangsnachricht mittels mehrerer Selektierdurchläufe gebildet werden.

5. Verfahren nach einem oder mehreren der Ansprüche 1 bis 4,
**dadurch gekennzeichnet,**
daß die Zuordnung der Knoten und/oder die gespeicherten Umschlüsselinformationen veränderbar sind.

6. Verfahren zur verschlüsselten Nachrichtenübertragung mittels sende- und empfangsseitigem Verfahren nach einem oder mehreren der Ansprüche 1 bis 5,
**dadurch gekennzeichnet**
daß Sender und Empfänger gleiche Verzweigungsgeflechte enthalten, wobei die zugeordneten Umschlüsselinformationen sende- und empfangsseitig entgegengesetzten Umschlüsselrichtungen entsprechen.

7. Verfahren zur Identifizierung von Objekten mittels Nachrichtenumschlüsselungen nach einem oder mehreren der Ansprüche 1 bis 6,
**dadurch gekennzeichnet**
- daß diesen Objekten gespeicherte Verzweigungsgeflechte zugeordnet sind,
- daß zur Identitätsfeststellung ein Anfrager Anfragenachrichten an diese Verzweigungsgeflechte richtet und Antwortnachrichten von diesen Verzweigungsgeflechten erhält,
- daß die Anfragenachrichten mittels der Verzweigungsgeflechte in diese Antwortnachrichten umgeschlüsselt werden und
- daß Antwortnachrichten als Identitätsschlüssel für spätere Identifizierungen gespeichert werden, wobei später mittels der gleichen Anfragenachricht für das gleiche Objekt der gleiche Identitätsschlüssel reproduziert wird.

8. Verfahren nach einem oder mehreren der Ansprüche 1 bis 7,
**dadurch gekennzeichnet,**
- daß diese Nachrichten assoziativ durch Bildung eines Verzweigungsbaumes aus miteinander über Äste verbundenen Knoten gespeichert werden,
- daß hierfür freie Knoten mit freien Ästen vorgesehen sind und diese freien Äste durch Zuordnen freier Knoten belegt werden können,
- daß die zu speichernden Nachrichten, ausgehend von einem ersten Knoten als Wurzel, schrittweise freie Knoten auf Selektierpfaden zu einem Verzweigungsbaum verbinden, indem jeweils ein anstehendes Zeichen einer Nachricht einen Ast eines anstehenden Knotens selektiert und
- daß ein selektierter belegter Ast zu einem nachfolgenden Knoten führt und daß ein selektierter freier Ast durch Zuordnen eines nachfolgenden freien Knotens belegt wird, wobei diese nachfolgenden Knoten wiederum für ein nachfolgendes Zeichen der Nachricht anstehen.

9. Vorrichtung zur Umschlüsselung einer Eingangsnachricht in eine Ausgangsnachricht, wobei eine Eingangsnachricht zeichenweise verarbeitet wird und wobei Zeichen der Ausgangsnachricht von mehreren Zeichen der Eingangsnachricht abhängig sind,
**gekennzeichnet durch**
- Speichermittel zur Speicherung eines Verzweigungsgeflechtes aus miteinander über Äste vernetzten Knoten, bei dem je Knoten eine Anzahl Äste zu beliebigen Knoten des Verzweigungsgeflechtes bestehen und wobei den Ästen und/oder den Knoten gespeicherte Umschlüsselinformationen zugeordnet sind,
- Selektiermittel für eine abhängig von Zeichen der Eingangsnachricht und ausgehend von einem ausgewählten Knoten vorgenommene Selektierung eines jeweiligen Astes zur Auswahl eines nachfolgenden Knotens zwecks Erzielung eines schrittweisen Selektierdurchlaufs durch das Verzweigungsgeflecht, der eine Eingangsnachricht beliebiger Länge in einen individuellen Selektierpfad umsetzt, wobei dieselben Knoten auf diesem Selektierpfad mehrfach durchlaufen werden können und
- Steuermittel zur Bildung von Zeichen der Ausgangsnachricht in Abhängigkeit von gespeicherten Umschlüsselinformationen der auf dem Selektierpfad durchlaufenen Äste und/oder Knoten des Verzweigungsgeflechtes.

10. Vorrichtung nach Anspruch 9,
**dadurch gekennzeichnet,**
daß Mittel zur Erzeugung von Zufallsereignissen vorgesehen sind, und daß die Zuordnung der Knoten und/oder die Umschlüsselinformationen in Abhängigkeit von diesen Zufallsereignissen festgelegt sind.

11. Vorrichtung nach Anspruch 9 oder 10,
**dadurch gekennzeichnet**
daß Umschlüsselinformationen für einander entgegengesetzte Umschlüsselrichtungen zugeordnet sind.

12. Vorrichtung nach einem oder mehreren der Ansprüche 9 bis 11,
**gekennzeichnet durch**
Steuermittel zur Bildung von Zeichen der Ausgangsnachricht mittels mehrerer Selektierdurchläufe.

13. Vorrichtung nach einem oder mehreren der Ansprüche 9 bis 12,
**gekennzeichnet durch**
Mittel, die die Zuordnung der Knoten und/oder die gespeicherten Umschlüsselinformationen verändern.

14. Vorrichtung zur verschlüsselten Nachrichtenübertragung mittels sende- und empfangsseitiger Vorrichtung nach einem oder mehreren der Ansprüche 9 bis 13,
**dadurch gekennzeichnet**
daß die Vorrichtung des Senders und die Vorrichtung des Empfängers gleiche Verzweigungsgeflechte enthalten, wobei die zugeordneten Umschlüsselinformationen sende- und empfangsseitig entgegengesetzten Umschlüsselrichtungen entsprechen.

15. Vorrichtung zur Identifizierung von Objekten mittels Nachrichtenumschlüsselungen nach einem oder mehreren der Ansprüche 9 bis 14,
**dadurch gekennzeichnet**
- daß diese Vorrichtungen diesen Objekten zugeordnet sind,
- daß zur Idenditätsfeststellung ein Anfrager Anfragenachrichten an diese Vorrichtungen richtet und Antwortnachrichten von diesen Vorrichtungen erhält,
- daß diese Vorrichtungen die Anfragenachrichten in diese Antwortnachrichten umschlüsseln und
- daß in einem Speichermittel Antwortnachrichten als Identitätsschlüssel für spätere Identifizierungen gespeichert werden, wobei später mittels der gleichen Anfragenachricht für das gleiche Objekt der gleiche Identitätsschlüssel reproduziert wird.

16. Vorrichtung für Datenschutz oder Kopierschutz von Informationsspeichern nach einem oder mehreren der Ansprüche 9 bis 15,
**dadurch gekennzeichnet,**
daß die zu schützende Information bei Speicherung und Wiedergabe mittels gleicher Verzweigungsgeflechte mit jeweils entgegengesetzten Umschlüsselrichtungen umgeschlüsselt wird.

17. Vorrichtung nach einem oder mehreren der Ansprüche 9 bis 16,
**dadurch gekennzeichnet**
daß das Speichermittel ein Informationsspeicher ist, dessen Speicherzellen die Knoten des Verzweigungsgeflechtes mit ihren Ästen darstellen.

18. Vorrichtung nach Anspruch 17,
**gekennzeichnet durch**
Speicherzellen, die eine Anzahl Äste als eine Anzahl Speicherzellenadressen speichern, von denen jeweils eine Adresse, abhängig von einem anstehenden Zeichen der Eingangsnachricht, als Adresse einer nachfolgend aufzurufenden Speicherzelle selektiert wird.

19. Vorrichtung nach Anspruch 18,
**gekennzeichnet durch**
- Speicherzellen, die zwei Speicherzellenadressen als zwei Äste mit unterschiedlichen Umschlüsselinformationen speichern und
- Zeichen der Eingangsnachricht mit zwei möglichen Informationszuständen, die jeweils eine dieser zwei Speicherzellenadressen selektieren.

20. Vorrichtung nach einem oder mehreren der Ansprüche 9 bis 19,
**gekennzeichnet durch**
Mittel zur Ergänzung der Umschlüsselinformationen des Verzweigungsgeflechtes durch extern vorgebbare, individuelle Merkmale zwecks Bildung individueller Ausgangsnachrichten.

21. Vorrichtung nach einem oder mehreren der Ansprüche 9 bis 20,
**gekennzeichnet durch**
- Ausbildung der Vorrichtung in Hochintegrationstechnologie zu einem miniaturisierten, integrierten Schaltkreis,
- Mittel des Schaltkreises zum Empfangen und Verarbeiten von mindestens einem Anregungssignal in einer ersten Zeitphase, das mittels seines Energieinhaltes die Betriebsenergie für den Schaltkreis liefert und
- Mittel des Schaltkreises zum Senden von mindestens einem Reaktionssignal in einer zweiten Zeitphase.

22. Vorrichtung nach einem oder mehreren der Ansprüche 9 bis 15,
**dadurch gekennzeichnet**
- daß diese Nachrichten in einem Speichermittel assoziativ durch Bildung eines Verzweigungsbaumes aus miteinander über Äste verbundenen Knoten gespeichert werden,
- daß hierfür freie Speicherplätze als Knoten mit freien Speicherzellen als Äste vorgesehen sind, wobei diese freien Speicherzellen durch Zuordnen von Zieladressen belegt werden können,
- daß die zu speichernden Nachrichten, ausgehend von einem ersten Speicherplatz als Wurzel, schrittweise freie Speicherplätze auf Selektierpfaden zu einem Verzweigungsbaum verbinden, indem ein anstehendes Zeichen einer Nachricht eine Speicherzelle eines anstehenden Speicherplatzes selektiert, und
- daß einer selektierten belegten Speicherzelle die Zieladresse zu einem nachfolgenden Speicherplatz zugeordnet ist und daß eine selektierte freie Speicherzelle durch Zuordnen einer Zieladresse zu einem nachfolgenden freien Speicherplatz belegt wird, wobei diese nachfolgenden Speicherplätze wiederum für ein nachfolgendes Zeichen der Nachricht anstehen.

23. Vorrichtung nach einem oder mehreren der Ansprüche 9 bis 22,
**gekennzeichnet durch**
Verbindung der Vorrichtung mit einer Person oder einem Objekt, vorzugsweise einem Fingerring.

24. Vorrichtung nach einem oder mehreren der Ansprüche 9 bis 23,
**dadurch gekennzeichnet,**
daß die Nachrichten geldwerten Beträgen entsprechen und daß Mittel zur Speicherung und zum Austausch dieser geldwerten Beträge vorgesehen sind.

## Claims

1. Process for encryption/decryption of an input message into an output message wherein an input message is processed in characters and wherein characters of the output message are dependent on several characters of the input message, characterised by
- a branching network of nodes cross-linked with one another via branches, in which per node there are a number of branches to other nodes of the branching network and wherein stored encryption/decryption information is allocated to the branches and/or nodes,
- a selection of a respective branch undertaken dependently of the character of the input message starting from a selected node for selection of a subsequent node with the purpose of achieving a stepwise selection run through the branching network, which converts an input message of any length into an individual selection path, wherein the same nodes on this selection path can be traversed more than one time, and
- the formation of characters of the output message in dependence on stored encryption/decryption information of the branches and/or nodes of the branching network run through on the selection path.

2. Process according to Claim 1, characterised in that the arrangement of the nodes and/or the encryption/decryption information is determined in dependence on random events of a random process.

3. Process according to Claim 1 or 2, characterised in that encryption/decryption information is provided for mutually opposite encryption/decryption directions.

4. Process according to one or more of Claims 1 to 3, characterised in that the characters of the output message are formed by means of several selection runs.

5. Process according to one or more of Claims 1 to 4, characterised in that the arrangement of the nodes and/or the stored encryption/decryption information are alterable.

6. Process for encrypted message transfer by means of processes at the transmitter and receiver ends according to one or more of Claims 1 to 5, characterised in that transmission and receiver contain identical branching networks, wherein the respective encryption/decryption informations correspond to mutually opposite encryption/decryption directions on the transmission and reception sides.

7. Process for identifying objects by means of message encryption/decryption according to one or more of Claims 1 to 6, characterised in
- that these objects are coordinated with stored branching networks,
- that for determining the identity an enquirer directs enquiry messages to these branching networks and receives answer messages from these branching networks,
- that the enquiry messages are encrypted/decrypted by means of the branching network into these answer messages, and
- that answer messages are stored as an identity key for later identifications, wherein later, by means of the same enquiry message, the same identity key is reproduced for the same object.

8. Process according to one or more of Claims 1 to 7, characterised in
- that these messages are stored associatively by the formation of a branching tree from nodes connected with one another via branches,
- that for this free nodes are provided with free branches and these free branches can be occupied by allocation of free nodes,
- that the messages to be stored, starting from a first node as a root, stepwise connect free nodes on selection paths to a branching tree, in that, in each case, a current character of a message selects a branch of a current node, and
- that a selected assigned branch leads to a subsequent node and that a selected free branch is occupied by allocation of a successive free node, wherein this subsequent node is in turn available for a subsequent character of the message.

9. Device for encryption/decryption of an input message into an output message, wherein an input message is worked on in characters and wherein characters of the output message are dependent upon several characters of the input message, characterised by
- storage means for storing a branching network of nodes cross-linked with one another via branches, in which, per node, a number of branches are associated with any of the nodes of the branching network and wherein stored encryption/decryption information is allocated to the branches and/or the nodes,
- selection means for a selection of a respective branch dependent upon characters of the input message and undertaken starting from a selected node for selection of a subsequent node with the object of achieving a stepwise selection run through the branching network, which converts an input message of any length in an individual selection path, wherein the same nodes can be traversed on this selection path more than once, and
- control means for forming characters of the output message in dependence on stored encryption/decryption information of the branches and/or nodes of the branching network run through on the selection path.

10. Device according to Claim 9, characterised in that means for generating random events are provided and that the arrangement of the nodes and/or of the encryption/decryption information is determined in dependence on these random events.

11. Device according to Claim 9 or 10, characterised in that encryption/decryption information is provided for mutually opposite encryption/decryption directions.

12. Device according to one or more of Claims 9 to 11, characterised by control means for forming characters of the output message by means of several selection runs.

13. Device according to one or more of Claims 9 to 12, characterised by means which change the arrangement of the nodes and/or of the stored encryption/decryption information.

14. Device for encrypted message transfer by means of devices on the transmission and reception ends according to one or more of Claims 9 to 13, characterised in that the device of the transmitter and the device of the receiver contain identical branching networks, wherein the respective encryption/decryption information correspond to mutually opposite encryption/decryption directions on the transmission and reception sides.

15. Device for identifying objects by means of message encryption/decryption according to one or more of Claims 9 to 14, characterised in
- that these devices are coordinated to these objects,
- that for determining identity, an enquirer directs enquiry messages to this device and receives answer messages from this device,
- that these devices convert the enquiry messages into this answer messages,
- that in a storage means, answer messages are stored as identity keys for later identifications, wherein later, by means of the same enquiry message for the same object, the same identity key is reproduced.

16. Device for data protection or copy protection of information stores according to one or more of Claims 9 to 15, characterised in that the information to be protected on storage and reproduction is encrypted/decrypted by means of identical branching networks with respectively oppositely directed encryption/decryption directions.

17. Device according to one or more of Claims 9 to 16, characterised in that the storage means is an information store, the storage cells of which represent the nodes of the branching network with its branches.

18. Device according to Claim 17, characterised by storage cells which store a number of branches as a number of storage cell addresses, of which respectively one address, dependent from a current character of the input message, is selected as the address of a subsequently to be called up storage cell.

19. Device according to Claim 18, characterised by
- storage cells which store two storage cell addresses as two branches with different encryption/decryption informations, and
- characters of the input message with two possible information conditions which select respectively one of these two storage cell addresses.

20. Device according to one or more of Claims 9 to 19, characterised by means for increasing the encryption/decryption information of the branching network by means of externally predeterminable individual features with the object of forming individual output messages.

21. Device according to one or more of Claims 9 to 20, characterised by
- formation of the device by large scale integrated technology to give a miniaturised integrated circuit,
- means forming part of the circuit for receiving and processing at least one stimulus signal in a first time phase which, by means of its energy content, provides the driving energy for the circuit, and
- means on the circuit for transmitting at least one reaction signal in a second time phase.

22. Device according to one or more of Claims 9 to 15, characterised in
- that these messages are stored in a storage means associatively by the formation of a branching tree of nodes connected with one another via branches,
- that for this, free storage locations are provided as nodes with free storage cells as branches, wherein these free storage cells can be occupied by allocation of target addresses,
- that the messages to be stored, starting from a first storage location as root, stepwise connect free storage spaces on selection paths to a branching tree, in that a current character of a message selects a storage cell of a current storage location, and
- that the target address to a subsequent storage location is allocated to a selected occupied storage cell, and that a selected free storage cell is occupied by allocation of a target address to a subsequent free storage space, wherein these subsequent storage spaces in turn are available for a subsequent character of the message.

23. Device according to one or more of Claims 9 to 22, characterised by connection of the device with a person or an object, preferably a finger ring.

24. Device according to one or more of Claims 9 to 23, characterised in that the messages correspond to amounts expressing currency and that means are provided for storage and for exchange of these amounts representing currency.

## Revendications

1. Procédé de transcodage d'un message d'entrée en un message de sortie, un message d'entrée étant traité caractère par caractère et les caractères du message de sortie dépendant de plusieurs caractères du message d'entrée,
**caractérisé par**
- un maillage d'interconnexion constitué de noeuds connectés entre eux par des branches, dans lequel il existe un certain nombre de branches par noeud menant à des noeuds quelconques du maillage d'interconnexion et où des informations de transcodage mémorisées sont assignées aux branches et / ou aux noeuds,
- un choix d'une branche effectué en fonction de caractères du message d'entrée et partant d'un noeud choisi pour le choix d'un noeud suivant afin d'obtenir un parcours progressif de sélection à travers le maillage d'interconnexion qui convertit un message d'entrée d'une longueur quelconque en un parcours de sélection individuel, les mêmes noeuds pouvant ètre passés plusieurs fois sur ce parcours de sélection et
- la formation de caractères du message de sortie en fonction d'informations de transcodage mémorisées des branches et / ou des noeuds du maillage d'interconnexion passés sur le parcours de sélection.

2. Procédé selon la revendication 1,
**caractérisé par le fait que**
l'assignation de noeuds et / ou les informations de transcodage sont déterminés en fonction d'événements aléatoires d'un procédé aléatoire.

3. Procédé selon la revendication 1 ou 2,
**caractérisé par le fait que**
des informations de transcodage sont assignées pour des directions de transcodage opposées entre elles.

4. Procédé selon une ou plusieurs des revendications 1 à 3
**caractérisé par le fait que**
les caractères du message de sortie sont formés au moyen de plusieurs passages de sélection.

5. Procédé selon une ou plusieurs des revendications 1 à 4,
**caractérisé par le fait que**
l'assignation des noeuds et / ou les informations de transcodage mémorisées sont modifiables.

6. Procédé de transmission codée des messages au moyen de procédés du côté émetteur et du côté réception selon une ou plusieurs des revendications 1 à 5,
**caractérisés par le fait que**
l'émetteur et le récepteur contiennent les mêmes maillages d'interconnexion, les informations de transcodage assignées correspondant à des directions de transcodage opposées du côté émetteur et du côté réception.

7. Procédé d'identification d'objets au moyen de transcodages de messages selon une ou plusieurs des revendications 1 à 6,
**caractérisé par le fait que**
- des maillages d'interconnexion mémorisés sont assignés à ces objets,
- que pour déterminer l'identité, un demandeur envoie des messages de demande à ces maillages d'interconnexion et reçoit d'eux des messages de réponse,
- que les messages de demande sont transcodés en ces messages de réponse au moyen des maillages d'interconnexion et
- que les messages de réponse sont mémorisés comme codes d'identité pour des identifications ultérieures, le même code d'identité étant reproduit plus tard au moyen du mème message de demande pour le même objet.

8. Procédé selon une ou plusieurs des revendications 1 à 7,
**caractérisé par le fait que**
- ces messages sont mémorisés associativement par la formation d'un arbre d'interconnexion constitué de noeuds connectés entre eux par des branches,
- des noeuds libres à branches libres sont prévus pour cela et que ces branches libres peuvent être occupées par l'assignation de noeuds libres,
- les messages à mémoriser relient progressivement des places de mémoire libres en un arbre d'interconnexion à partir d'une première place de mémoire comme racine en ce qu'un caractère en attente d'un message sélectionne une cellule de mémoire d'une place de mémoire en attente, et
- qu'une branche occupée sélectionnée conduit à un noeud suivant et qu'une branche libre sélectionnée est occupée par l'assignation d'un noeud libre suivant, ces noeuds suivants attendant de nouveau un caractère suivant du message.

9. Dispositif de transcodage d'un message d'entrée en un message de sortie, un message d'entrée étant traité caractère par caractère et les caractères du message de sortie dépendant de plusieurs caractères du message d'entrée,
**caractérisé par**
- des moyens de mémorisation pour mémoriser un maillage d'interconnexion constitué de noeuds connectés entre eux par des branches, dans lequel il existe un certain nombre de branches par noeud menant à des noeuds quelconques du maillage d'interconnexion et où des informations de transcodage mémorisées sont assignées aux branches et / ou aux noeuds,
- des moyens de sélection pour un choix d'une branche effectué en fonction de caractères du message d'entrée et partant d'un noeud choisi pour le choix d'un noeud suivant afin d'obtenir un parcours progressif de sélection à travers le maillage d'interconnexion qui convertit un message d'entrée d'une longueur quelconque en un parcours de sélection individuel, les mêmes noeuds pouvant ètre passés plusieurs fois sur ce parcours de sélection et
- des moyens de commande pour former des caractères du message de sortie en fonction d'informations de transcodage mémorisées des branches et / ou des noeuds du maillage d'interconnexion passés sur le parcours de sélection.

10. Dispositif selon la revendication 9,
**caractérisé par le fait que**
des moyens de provoquer des événements aléatoires sont prévus et que l'assignation des noeuds et / ou les informations de transcodage sont déterminés en fonction de ces événements aléatoires.

11. Dispositif selon la revendication 9 ou 10,
**caractérisé par le fait que**
les informations de transcodage sont assignées pour des directions de transcodage opposées entre elles.

12. Dispositif selon l'une ou plusieurs des revendications 9 à 11,
**caractérisé par le fait que**
les caractères du message de sortie sont formés au moyen de plusieurs passages de sélection.

13. Dispositif selon l'une ou plusieurs des revendications 9 à 12,
**caractérisé par**
des moyens qui modifient l'assignation des noeuds et / ou les informations de transcodage mémorisées.

14. Dispositif de transmission codée des messages au moyen d'un dispositif du côté émetteur et du côté récepteur selon l'une ou plusieurs des revendications 9 à 13,
**caractérisé par le fait que**
le dispositif de l'émetteur et le dispositif du récepteur contiennent les mêmes maillages d'interconnexion, les informations de transcodage assignées correspondant à des directions de transcodage opposées du côté émetteur et du côté réception.

15. Dispositif d'identification d'objets au moyen de transcodages de messages selon l'une ou plusieurs des revendications 9 à 14,
**caractérisé par le fait que**
- ces dispositifs sont assignés à ces objets,
- pour déterminer son identité un demandeur envoie des messages de demande à ces dispositifs et reçoit des messages de réponse de ces dispositifs,
- que ces dispositifs transcodent les messages de demande en ces messages de réponse et
- que des messages de réponse sont mémorisés dans un moyen de mémorisation comme codes d'identité pour des identifications ultérieures, le même code d'identité étant reproduit plus tard au moyen du même message de demande pour le même objet.

16. Dispositif pour la protection des données ou la protection contre le copiage des mémoires d'informations selon l'une ou plusieurs des revendications 9 à 15,
**caractérisé par le fait que**
l'information à protéger est transcodée lors de sa mémorisation et de sa reproduction au moyen des mêmes maillages d'interconnexion avec des directions de transcodage opposées chaque fois.

17. Dispositif selon une ou plusieurs des revendications 9 à 16,
**caractérisé par le fait que**
que le moyen de mémorisation est une mémoire d'informations dont les cellules de mémoire représentent les noeuds du maillage d'interconnexion avec leurs branches.

18. Dispositif selon la revendication 17,
**caractérisé par**
des cellules de mémoire qui mémorisent un certain nombre de branches en tant que certain nombre d'adresses de cellules de mémoire dont une adresse est sélectionnée chaque fois comme adresse d'une cellule de mémoire à appeler ensuite selon un caractère en attente du message d'entrée.

19. Dispositif selon la revendication 18,
**caractérisé par**
- des cellules de mémoire, qui mémorisent deux adresses de cellules de mémoire comme deux branches avec des informations de transcodage différentes et
- des caractères du message d'entrée avec deux états d'information possibles, qui sélectionnent chaque fois l'une de ces deux adresses de cellules de mémoire.

20. Dispositif selon l'une ou plusieurs des revendications 9 à 19,
**caractérisé par**
des moyens de compléter les informations de transcodage du maillage d'interconnexion par des caractéristiques individuelles, prédéfinissables pour la formation de messages individuels de sortie.

21. Dispositif selon une ou plusieurs des revendications 9 à 20
**caractérisé par**
- la formation du dispositif sous forme de circuit intégré miniaturisé par technique de haute intégration,
- des moyens du circuit pour recevoir et traiter au moins un signal d'activation en une première phase de temps, qui fournit l'énergie d'actionnement pour le circuit et
- des moyens du circuit pour l'envoi d'au moins un signal de réaction dans une deuxième phase de temps.

22. Dispositif selon l'une ou plusieurs des revendications 9 à 15,
**caractérisé par le fait que**
- ces messages sont mémorisés associativement dans un moyen de mémorisation par la formation d'un arbre d'interconnexion constitué de noeuds connectés entre eux par des branches,
- ces places de mémoire libres sont prévues comme noeuds à cellules de mémoire libres comme branches, ces cellules de mémoire libres pouvant être occupées par l'assignation d'adresses cibles,
- les messages à mémoriser relient progressivement des places de mémoire libres en un arbre d'interconnexion à partir d'une première place de mémoire comme racine en ce qu'un caractère en attente d'un message sélectionne une cellule de mémoire d'une place de mémoire en attente, et
- à une cellule de mémoire occupée sélectionnée est assignée l'adresse cible pour une place de mémoire suivante et qu'une place de mémoire libre sélectionnée est occupée par l'assignation d'une adresse cible à une place de mémoire libre suivante, ces places de mémoire attendant à leur tour un caractère suivant du message.

23. Dispositif selon l'une ou plusieurs des revendications 9 à 22,
**caractérisé par**
la liaison du dispositif avec une personne ou un objet, de préférence avec un anneau.

24. Dispositif selon l'une ou plusieurs des revendications 9 à 23,
**caractérisé par le fait que**
les messages correspondent à des sommes d'argent liquide et que des moyens sont prévus pour la mémorisation et l'échange de ces sommes d'argent liquide.
